# EUROPEAN PATENT APPLICATION

(11) **EP 4 779 392 A2**
(43) Date of publication of application: **22.07.2026**
(21) Application number: 26181438.8
(22) Date of filing: 06.09.2023
(51) Int. Cl.: G02B 27/01

(54) **FACE ENGAGING STRUCTURE**

(30) Priority: 06.09.2022 US 202263374741 P; 01.09.2023 US 202318460193
(62) Divisional of application: 23195757.2
(71) Applicant: Apple Inc., Cupertino, CA 95014 (US)
(72) Inventor: KASAR, Darshan R., San Francisco (US); SMITH, Samuel G, San Francisco (US); ANDERSON, Jonathan M., San Francisco (US); BOSCH, Erin M., San Jose (US); HOSSAIN, Muhammad F., Sunnyvale (US); MARTINEZ, Liam R., San Francisco (US); GALLAHER, Andrew, Sunnyvale (US); GUY, Ian A., Santa Cruz (US); BAILLARGEON, Brian, Redwood City (US); KIRKWOOD, Keith W., Bainbridge Island (US); RASMUSSEN, Timothy J., Seattle (US)
(74) Representative: Rooney, John-Paul

(57) **Abstract**

An apparatus can include a display, a facial interface, and a joint movably constraining the facial interface to the display at a forehead region on a face or a zygoma region on the face.

## Description

### CROSS-REFERENCE TO RELATED APPLICATION(S)

This claims priority to U.S. Provisional Patent Application No. 63/374,741, filed 6 September 2022, and entitled "Face Engaging Structure," the entire disclosure of which is hereby incorporated by reference. This claims priority to U.S. Patent Application No. 18/460,193, filed 1 September 2023, and entitled "Face Engaging Structure," the entire disclosure of which is hereby incorporated by reference.

### FIELD

The described embodiments relate generally to facial interfaces of a head-mountable device. More particularly, the present embodiments relate to facial interfaces of a head-mountable device that can provide increased comfort and flexure.

### BACKGROUND

Recent advances in portable computing have enabled head-mountable devices that provide augmented and virtual reality (AR/VR) experiences to users. Such head-mountable devices typically include various components such as a display, viewing frame, lens, battery, motor, speaker, and other components. These components can operate together to provide an immersive user experience. In particular, head mountable-devices include components that help provide a distraction-free setting by blocking or sealing out the outer environment (e.g., ambient light).

Additionally, users have myriad different anatomical features, including head size, eye location, cheek and forehead bone structure, and so forth. Unfortunately, conventional head-mountable devices fail to provide a custom, comfortable fit for a fully immersive experience. Indeed, conventional head-mountable devices have rudimentary customization features (if any). For example, users of a conventional head-mountable device may have differing facial structures that the head-mountable device cannot accommodate. This user-to-user variation can create a poor user experience, causing pressure on a user's face from the head-mountable device. Therefore, a head-mountable device capable of dynamically adapting to different user facial profiles is desired.

### SUMMARY

In at least one example of the present disclosure, an apparatus includes a display, a facial interface, and a connector between the display and the facial interface. The facial interface can translate or rotate relative to the display via the connector.

In one example, the connector moveably constrains the facial interface to the display at a forehead location or a zygoma location. In one example, the apparatus includes an additional connector between the display and the facial interface. The additional connector includes a first joint positioned at the forehead location, and the connector includes a second joint different than the first joint, the second joint being positioned at the zygoma location. In one example, the connector includes a pivot joint, a soft joint, a flexure joint, or a spring joint. In one example, the facial interface includes a flexure portion. In one example, the flexure portion includes a serpentine pattern. In one example, the flexure portion is positioned at a top corner region, a bottom corner region, a forehead region, or a temple region.

In at least one example of the present disclosure, an apparatus includes a display, a facial interface, and a joint moveably constraining the facial interface to the display at a forehead location on the facial interface or a zygoma location on the facial interface.

In one example, the facial interface includes a flexure portion adjacent to the joint. In one example, the apparatus further includes an additional joint, wherein the flexure portion is positioned between the joint and the additional joint. In one example, the facial interface further includes a solid portion, the flexure portion and the solid portion both positioned in between the joint and the additional joint. In one example, the facial interface includes an additional flexure portion, the flexure portion being positioned on one side of the joint, and the additional flexure portion being positioned on another side of the joint. In one example, the flexure portion is positioned at a forehead area, and the additional flexure position is positioned at a zygoma-maxilla area. In one example, the facial interface includes a solid portion on one side of the joint and a flexure portion on another side of the joint. In one example, the facial interface includes a first flexure portion at a first facial position and a second flexure portion at a second facial position mirroring the first facial position.

In at least one example of the present disclosure, an apparatus includes a display, a facial interface including a flexure portion, and a connector between the display and the facial interface, the facial interface being translatable and rotatable via the connector and the flexure portion.

In one example, the facial interface includes an elastomer material. In one example, the facial interface includes a first shot composed of a first material and a second shot composed of a second material that differs from the first material, wherein the first material includes the elastomer material. In one example, the joint includes a compliant mechanism.

In at least one example of the present disclosure, an apparatus includes a display, a display frame attached to the display, the display frame defining a relief cutout, a facial interface, and a connector positioned between the display frame and the facial interface.

In one example, the relief cutout includes a lozenge-shaped thru-hole in the display frame. In one example, the relief cutout includes a cored-out portion of the display frame. In one example, the relief cutout includes an array of dimples or thru-holes. In one example, the apparatus further includes a stiffener member positioned between the display frame and the facial interface. In one example, the connector couples the display frame and stiffener member to the facial interface. In one example, the display frame includes a first frame shell including a first material defining a pocket in a first surface and a second frame shell including a second material, the second frame shell being coupled to the first frame shell over the pocket, and the second material being different than the first material. In one example, the display frame includes a metal portion and an overmolding that envelops the metal portion. In one example, the apparatus further includes a connector support area of the display frame, the connector support area include a reinforcement material. In one example, the connector support area is devoid of the relief cutout. In one example, the facial interface includes a base portion and an interchangeable portion removably attached to the base portion.

In at least one example of the present disclosure, an apparatus includes a display, a display frame attached to the display, a facial interface, a stiffener member positioned between the display frame and the facial interface, and a connector coupling the display frame and the stiffener member to the facial interface.

In one example, the display frame and the stiffener member form a gap therebetween. In one example, the apparatus further includes a connector bridging the gap between the display frame and the stiffener member. In one example, the apparatus further includes an additional connector coupling the display frame and the stiffener member to the facial interface.

In at least one example of the current disclosure, an apparatus includes a wearable display, a display frame attached to the wearable display, the display frame includes a first frame shell including a first material defining a pocket in a first surface and a second frame shell including a second material, the second frame shell being coupled to the first frame shell over the pocket, and the second material being different than the first material.

In one example, the first frame shell includes a plastic material and the second frame shell incudes a metal material. In one example, the first frame shell includes a first-shot mold, and the second frame shell includes a second-shot mold. In one example, the second material includes a stiffener material. In one example, the first frame shell includes a mold webbing and the pocked is composed of multiple pockets separated by the mold webbing.

### BRIEF DESCRIPTION OF THE DRAWINGS

The disclosure will be readily understood by the following detailed description in conjunction with the accompanying drawings, wherein like reference numerals designate like structural elements, and in which:
FIG. 1 shows a top view of an example head-mountable device.
FIG. 2A shows a side view of an example head-mountable device.
FIG 2B shows a front view of an example head-mountable device.
FIG. 3A shows a perspective view of a head-mountable device including a connector positioned at a forehead location.
FIGS. 3B-3E show various connector types.
FIG. 4A shows a perspective view of a head-mountable device including a connector positioned at the zygoma location.

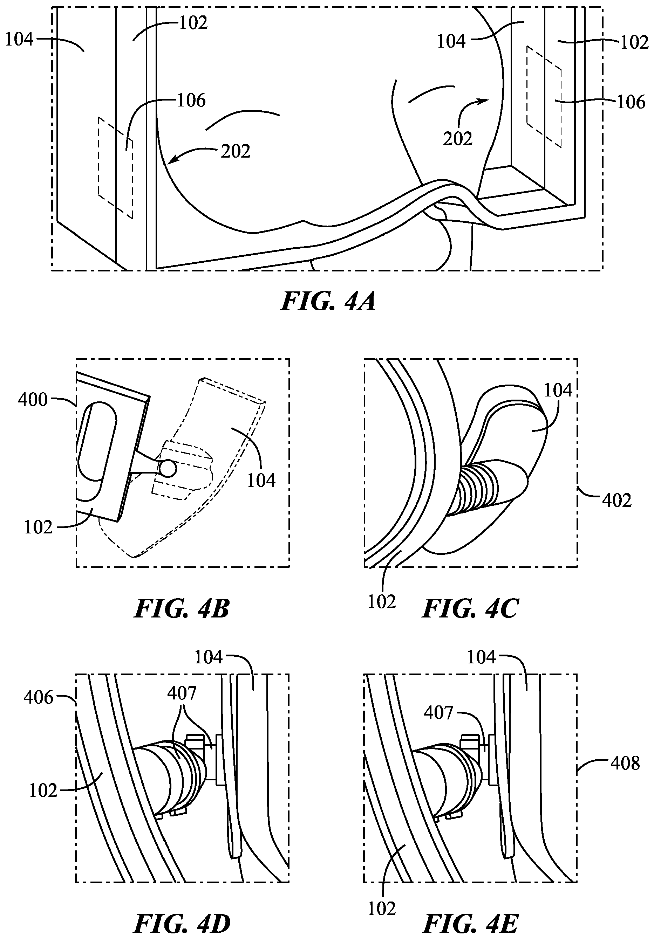

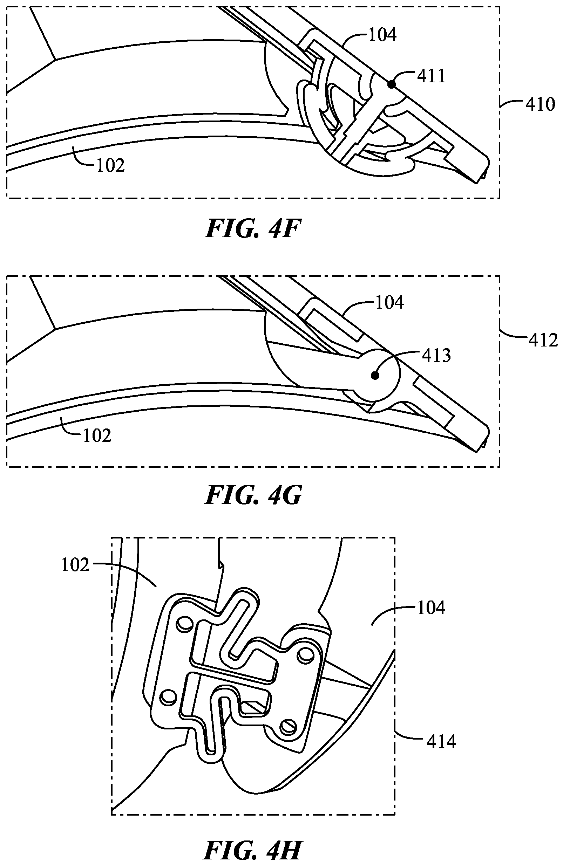

FIGS. 4A-4H show various connector types.

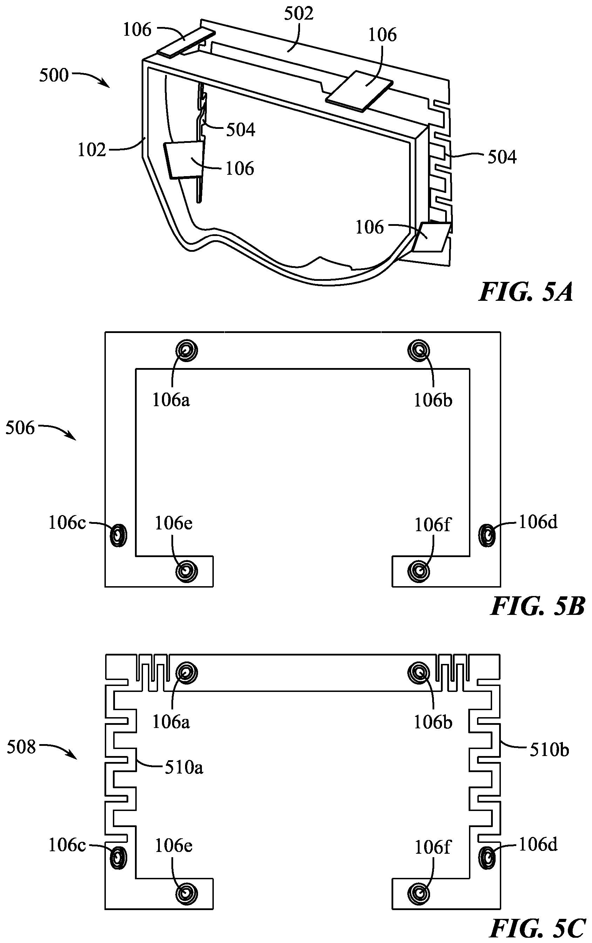

FIG. 5A shows a perspective view of a head-mountable device including a facial interface.
FIGS. 5B-5G show various facial interfaces.

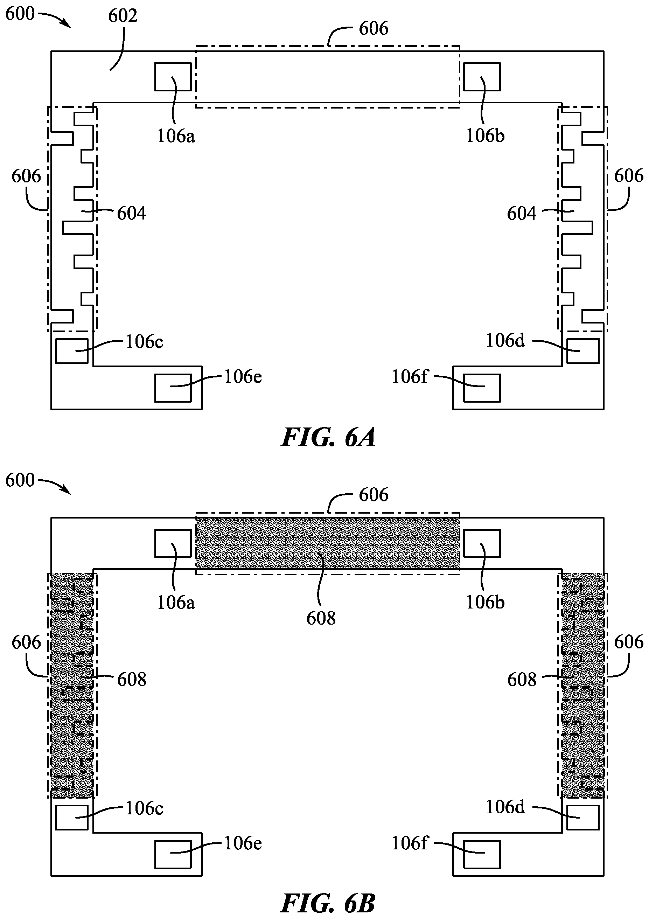

FIGS. 6A-6B show another variation of a facial interface.

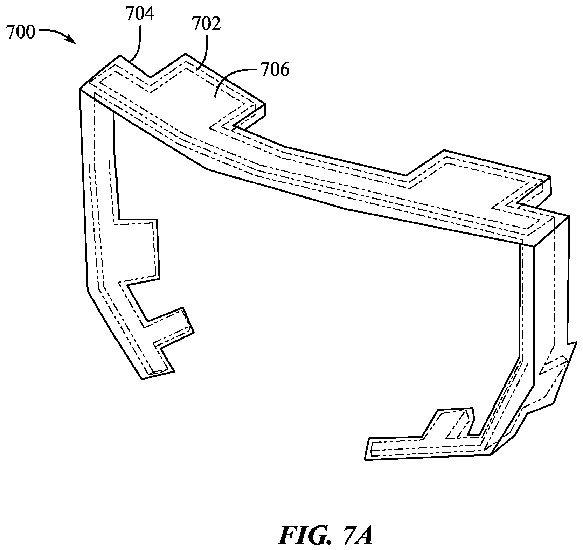

FIG. 7A shows a perspective view of a display including a display frame.

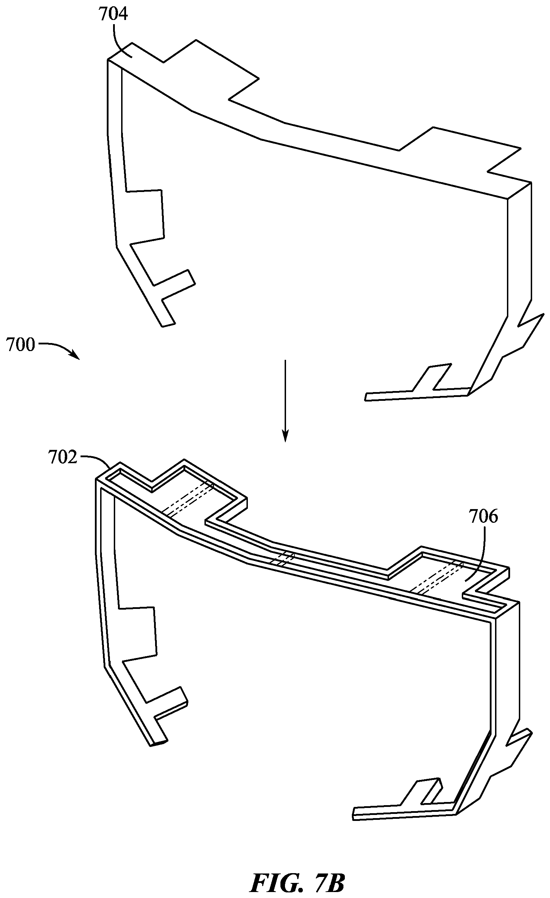

FIG. 7B shows an exploded perspective view of a display including display frame.

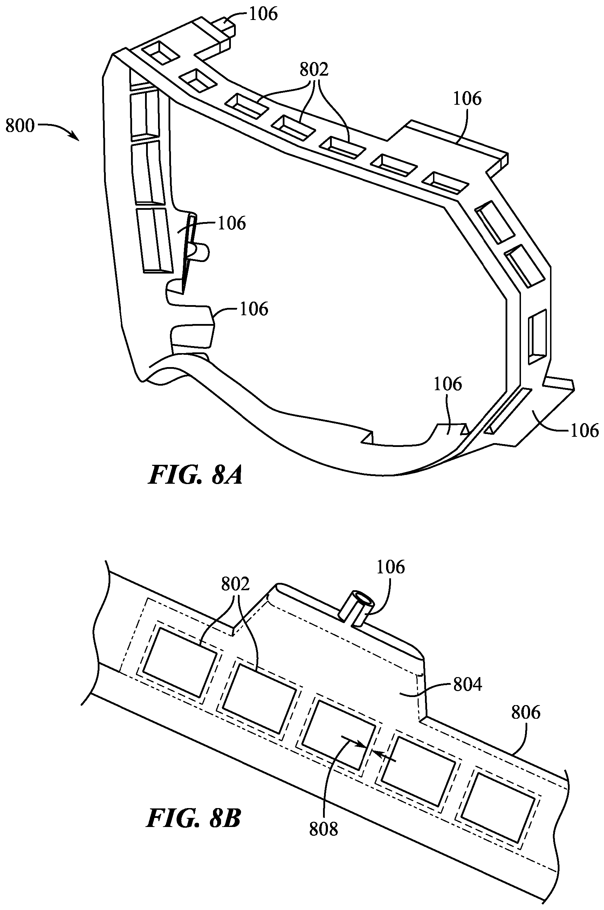

FIG. 8A-8B show a display frame with a relief cutout.

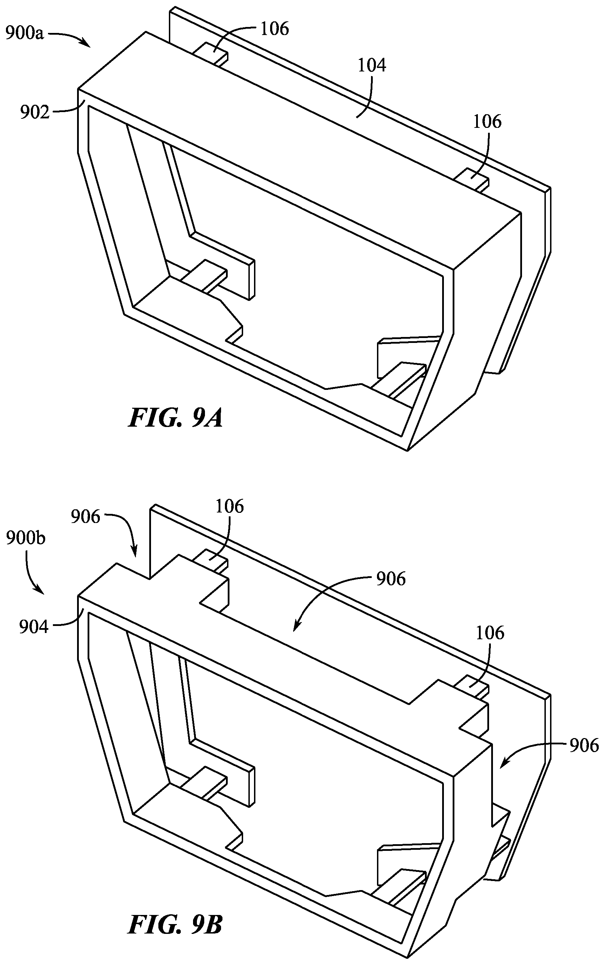

FIG. 9A shows a head-mountable device with no relief cutout.
FIG. 9B shows a head-mountable device with a relief cutout.

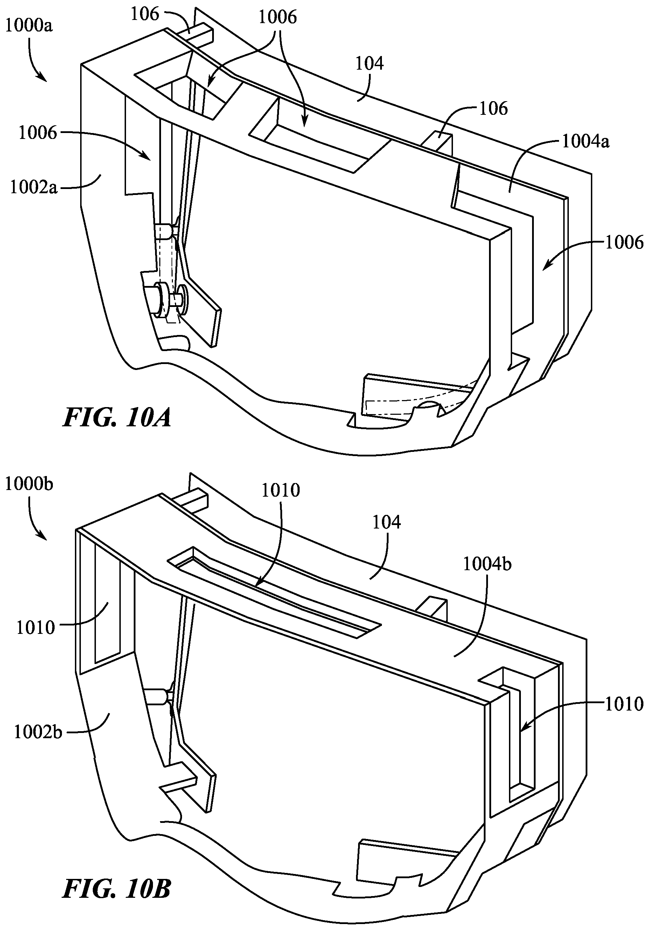

FIGS. 10A-10B show a head-mountable device with a relief cutout at various locations.

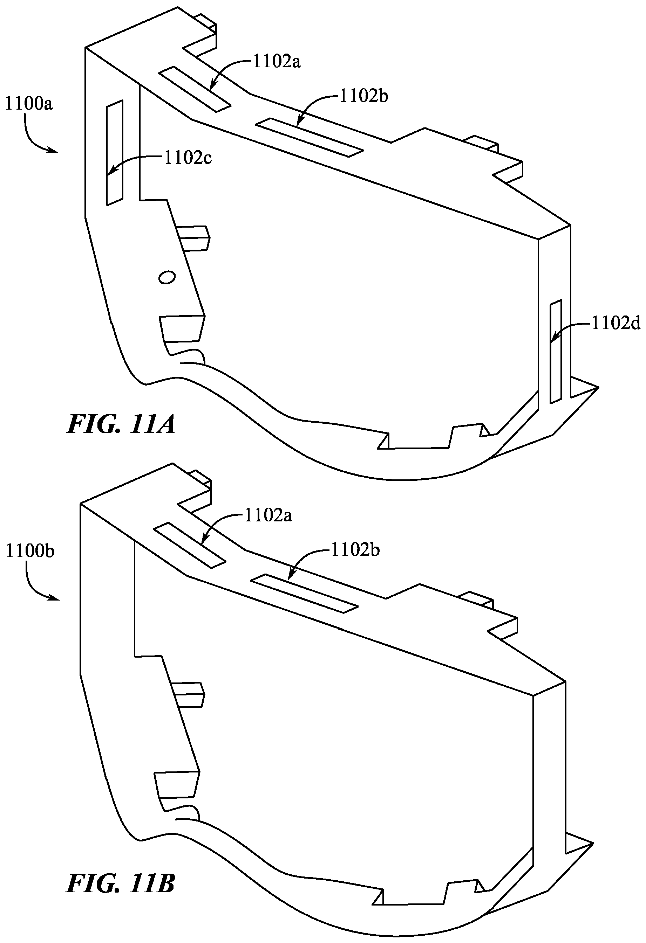

FIG. 11A-11C show a display frame with a relief cutout.

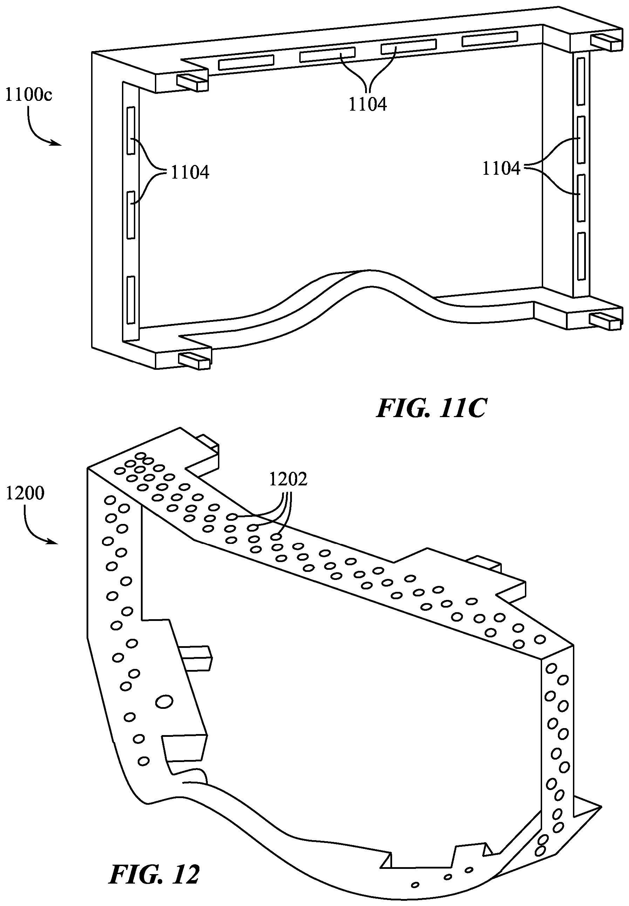

FIG. 12 shows a display frame with thru-holes.

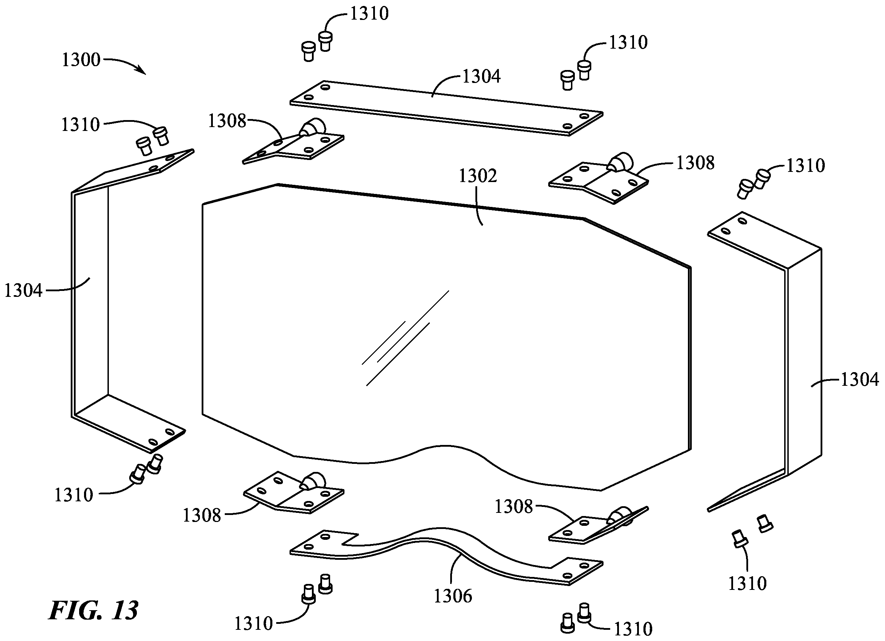

FIG. 13 shows a display frame with stiffeners.

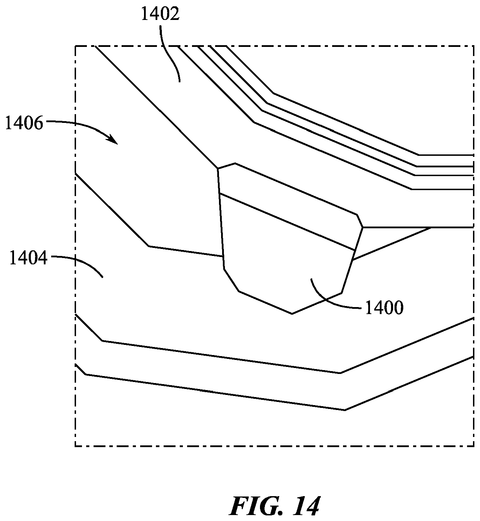

FIG. 14 shows a perspective view of an example connector.

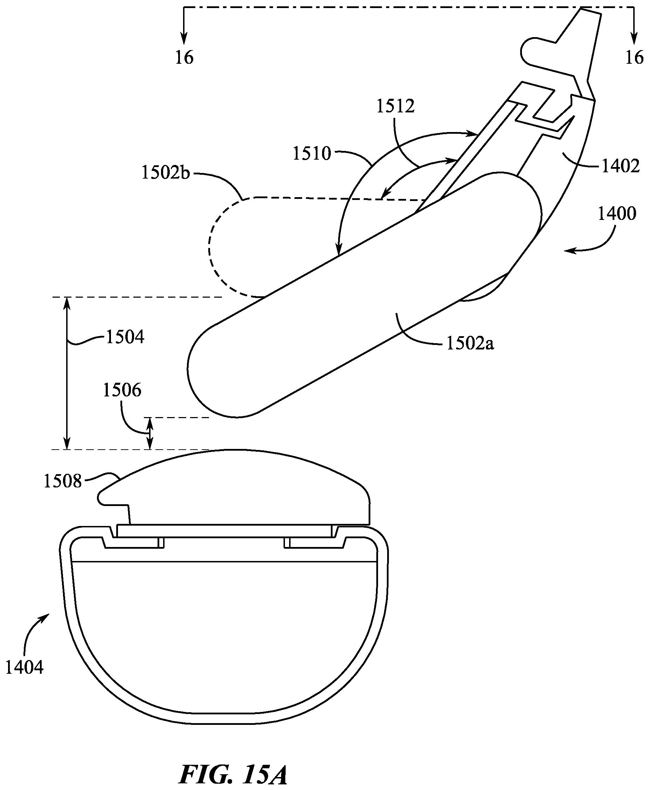

FIG. 15A shows a side view of an example connector positioned between a display frame and a facial interface.

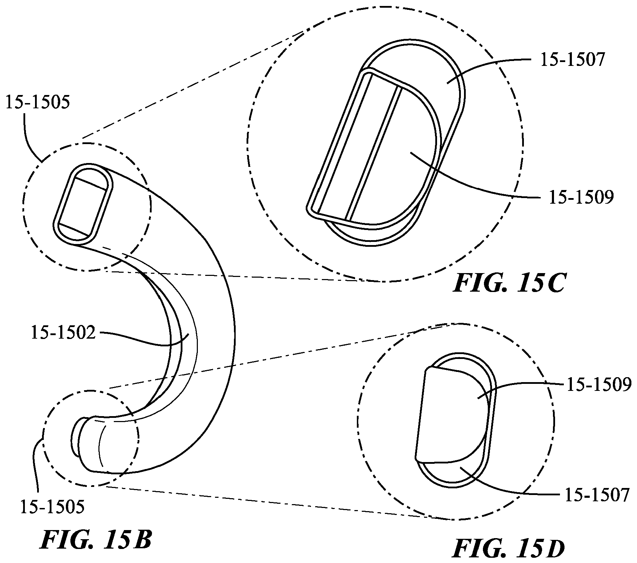

FIG. 15B shows an example facial interface.
FIGS. 15C-15D show example cross-sections of the facial interface shown in FIG. 15B.

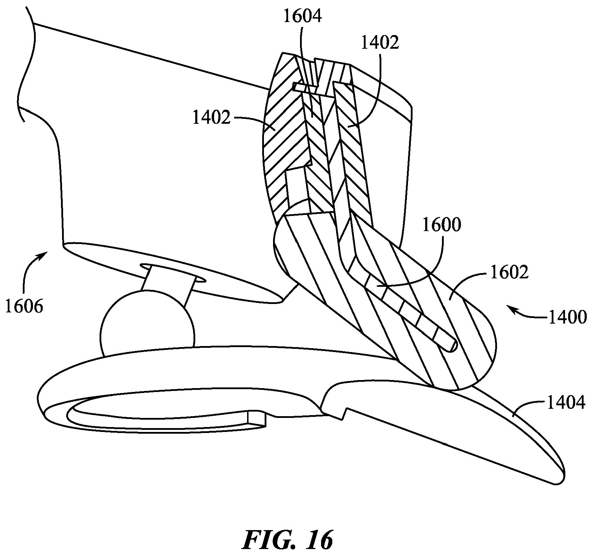

FIG. 16 shows a cross-sectional view of an example connector with a connector frame and post.

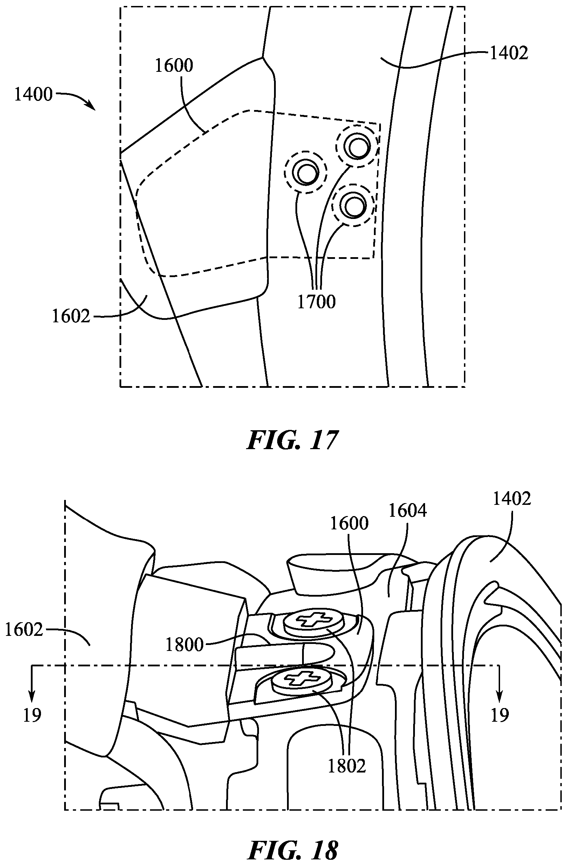

FIG. 17 shows a top view of an example connector.
FIG. 18 shows a side perspective view of a base of an example connector where attached to an example display frame.

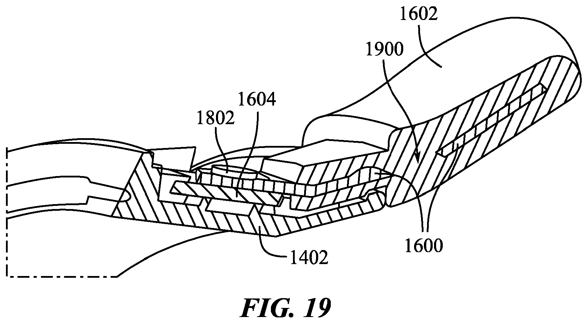

FIG. 19 shows another cross-sectional view of an example connector.

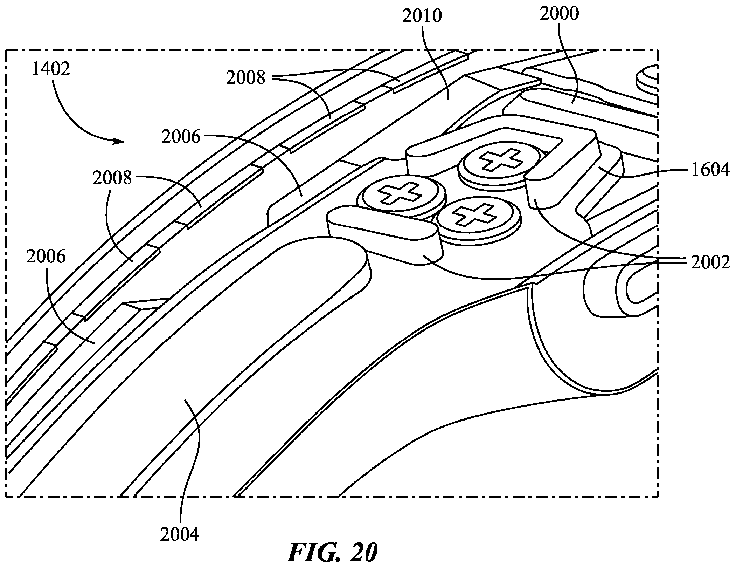

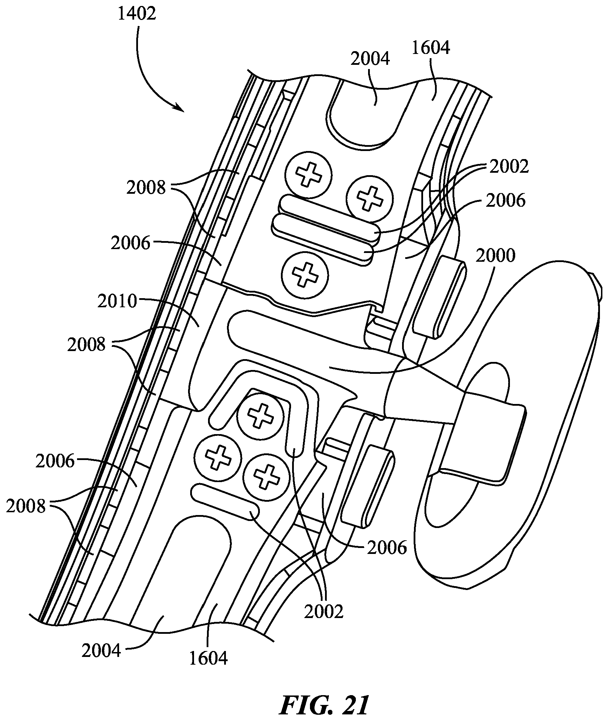

FIGS. 20-21 respectively show perspective and top views of example adhesives in an example head-mountable device.

### DETAILED DESCRIPTION

The following description will make detailed reference to representative embodiments illustrated in the accompanying drawings. The following descriptions are not intended to limit the embodiments to one preferred embodiment or example. Rather, it is intended to cover alternatives, modifications, and equivalents as can be included within the spirit and scope of the described embodiments as defined by the appended claims.

The following disclosure relates to wearable electronic devices (e.g., head-mountable device). More particularly, the present embodiments relate to connections between a display and a facial interface of a head-mountable device. Additionally, the present embodiments relate to lightweight variations of a facial interface.

When donning a head-mountable device or during use, the position and weight of the head-mountable device can affect the quality of user experience. Indeed, conventional head-mountable devices can be heavy due to the mass of materials (or combination of materials) used in manufacture. The additional weight can apply excess pressure to a user's face causing discomfort and pressure points at certain regions of the face. This user discomfort can degrade the overall AR/VR experience.

Exacerbating the weight factor, facial regions that contact a head-mountable device can have unique facial characteristics, such as variations of cranial width or length or variations in facial bones (e.g., frontal bone, zygoma, maxilla, etc.). Thus, these areas of high facial variability can undergo acute pressure or lend to faster user exhaustion.

Connections of the present disclosure address these and/or other issues of conventional head-mountable devices by providing dynamic adjustment. Indeed, connections of the present disclosure can dynamically adjust to the facial variability of users to provide a comfortable user experience. Additionally, connections (and associated connector positioning) of the present disclosure can better distribute applied loads across the user face for improved comfort compared to conventional head-mountable device. These connections can range from mechanical-based connectors providing more mechanical ranges of motion to organic connectors providing more organic ranges of motion.

To illustrate, the connectors may be positioned at various locations (e.g., maxilla, zygoma, frontal bone, etc.). The connectors can include various types of joints (e.g., pivot joint, soft joint, flexure joint, spring joint, etc.). The connectors can, in combination, provide a comfortable pressure distribution.

Additionally, or alternatively to connectors, a head-mountable device of the present disclosure includes facial interface with a flexible (or flexure) portion. The flexure portion of the facial interface can include an elastomer material capable of recovering to an original shape after being flexed or stretched. In certain instances, the flexure region includes a particular pattern (e.g., a serpentine pattern) that can naturally flex, move, and conform to a user face.

Furthermore, embodiments described below provide examples of adjustment mechanisms, connectors, and facial interfaces of head-mountable devices that are lighter and more comfortable than conventional head-mountable devices. To illustrate, a head-mountable device can include a display frame with relief cutouts (e.g., lozenge-shaped thru-holes, cored-out portions, dimples, etc.). The relief cutouts can reduce the weight of the head-mountable device while maintaining structural integrity of the head-mountable device.

In another example, the head-mountable device includes a stiffener member that allows for a reduced amount of implemented material (and hence, weight savings). The stiffener member can be positioned between the display frame and the facial interface. The stiffener member can also be implemented as an additional shot of material in manufacturing. Additionally, or alternatively, the stiffener member can be overmolded to strengthen certain areas (e.g., at connection sites).

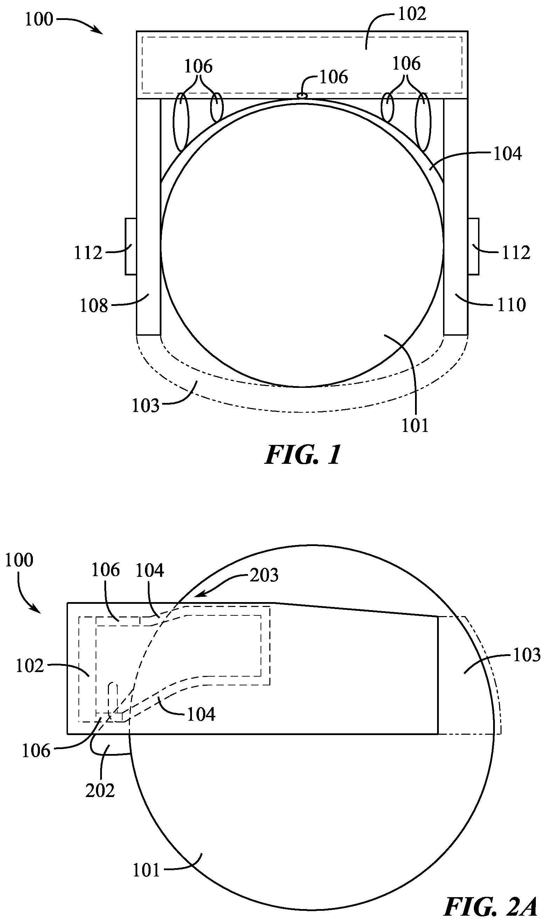

These and other embodiments are discussed below with reference to FIGS. 1 - 12. However, those skilled in the art will readily appreciate that the detailed description given herein with respect to these Figures is for explanatory purposes only and should not be construed as limiting. Furthermore, as used herein, a system, a method, an article, a component, a feature, or a sub-feature including at least one of a first option, a second option, or a third option should be understood as referring to a system, a method, an article, a component, a feature, or a sub-feature that can include one of each listed option (*e.g.,* only one of the first option, only one of the second option, or only one of the third option), multiple of a single listed option (*e.g.,* two or more of the first option), two options simultaneously (*e.g.,* one of the first option and one of the second option), or combination thereof (*e.g.,* two of the first option and one of the second option).

FIG. 1 illustrates a top view of a head-mountable device 100 worn on a user head 101. The head mountable device can include a display 102 (e.g., one or more optical lenses or display screens in front of the eyes of the user). The display 102 can include a display for presenting a virtual reality visualization, an augmented reality visualization, or other suitable visualization.

The head-mountable device 100 also includes a facial interface 104. As used herein, the term "facial interface" refers to a portion of the head-mountable device 100 that engages a user face via direct contact. In particular, a facial interface includes portions of the head-mountable device 100 that conform to (e.g., compress against) regions of the user face. For example, a facial interface may include a pliant (or semi-pliant) face track that spans the forehead, wraps around the eyes, contacts the zygoma and maxilla regions of the face, and bridges the nose. Furthermore, a facial interface can include various components forming a structure, webbing, cover, fabric, or frame of a head-mountable device disposed between the display 102 and the user skin. In particular implementations, a facial interface can include a seal (e.g., a light seal, environment seal, dust seal, air seal, etc.). It will be appreciated that the term "seal" can include partial seals or inhibitors, in addition to complete seals (e.g., a partial light seal where some ambient light is blocked and a complete light seal where all ambient light is blocked when the head-mountable device is donned).

In addition, the head-mountable device 100 includes connector(s) 106. As used herein, the terms "connector" or "joint" refer to a joining between the display 102 and facial interface 104. In some examples, a connector allows the facial interface 104 to translate or rotate relative to the display 102 via the connector. In other examples, the connector allows the facial interface 104 to both translate and rotate relative to the facial interface 104. For example, the connector(s) 106, when acted on can translate the facial interface 104 toward or away from the display 102 (e.g., in a linear fashion). In another example, the connection(s) 106 when acted on can rotate the facial interface 104 up or down relative to the display 102 (e.g., in an angular fashion). In particular implementations, the connector(s) 106 moveably constrain the facial interface 104 to the display 102 at a forehead location, a zygoma location, or a maxilla location.

In this manner, the connection(s) 106 can movably constrain the display 102 relative to the facial interface 104. As used herein, the term "movably constrain" refers to the type of connection that can dynamically move (e.g., translate or rotate), yet retain control over a particular element's movement or position. For example, to "movably constrain" means the connection(s) 106 can bound movement of the display 102 within two degrees of freedom (e.g., along a horizontal plane and along an additional plane non-planar with the horizontal plane) relative to the facial interface 104.

As used herein, the term "forehead region" refers to an area of a human face between the eyes and the scalp of a human. Additionally, the term "maxilla region" refers to an area of a human face corresponding to the zygomatic bone structure of a human. Similarly, the term "maxilla region" refers to an area of a human face corresponding to the maxilla bone structure of a human. Further, the term "temple region" refers to an area of a human face between a respective eye and ear on a particular side of a face (e.g., between cheek bones and a forehead region). It will be appreciated that the foregoing regions can correspond to particular structure of the head-mountable device 100. However, such structure of the head-mountable device 100 is not dependent on a face or a user.

The connector(s) 106 allow the facial interface 104 to conform freely to a wide range of facial topographies, thereby allowing the facial interface 104 to pivot and flex relative to the display 102. The connector(s) 106 can also distribute loads (e.g., forces exerted from different facial topographies or compression from the strap 103) evenly on a user's face. The connector(s) 106 can include one or more joints (e.g., pivot joint, soft joint, flexure joint, spring joint, etc.) that allow (or actively provide) translation or rotation of the facial interface 104 relative to the display 102.

Furthermore, locations of the connector(s) 106 can be modified or tuned, as can the number of connections. For example, the location and or number of the connector(s) 106 can correlate to an amount of force or pressure exerted on the user at any one datum (e.g., forehead region, maxilla region, zygoma region, etc.) In other instances, the location and/or the number of connector(s) 106 can correspond to rigidity (or rigidity variances) between the connector(s) 106.

Additionally shown in FIG. 1, the head-mountable device 100 includes one or more arms 108, 110. The arms 108, 110 are connected to the display 102 and extend distally toward the rear of the head. The arms 108, 110 are configured to secure the display in a position relative to the user head 101 (e.g., such that the display 102 is maintained in front of a user's eyes). For example, the arms 108, 110 extend over the user's ears 112. In certain examples, the arms 108, 110 rest on the user's ears 112 to secure the head-mountable device 100 via friction between the arms 108, 110 and the user head 101. For example, the arms 108, 110 can apply opposing pressures to the sides of the user head 101 to secure the head-mountable device 100 to the user head 101. Optionally, the arms 108, 110 can be connected to each other via a strap 103 (shown in the dashed lines) that can compress the head-mountable device 100 against the user head 101.

Any of the features, components, and/or parts, including the arrangements and configurations thereof shown in FIG. 1 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 1.

FIGS. 2A-2B respectively illustrate side and front view profiles of an example of the head-mountable device 100. As discussed above, the head-mountable device 100 includes the display 102, the facial interface 104, and the connector(s) 106. In particular, as shown in FIGS. 2A-2B, the facial interface 104 can indeed wrap around the eyes 201, bridge the nose 202, span the forehead 203, and contact a maxilla facial region 204 and a zygoma facial region 205.

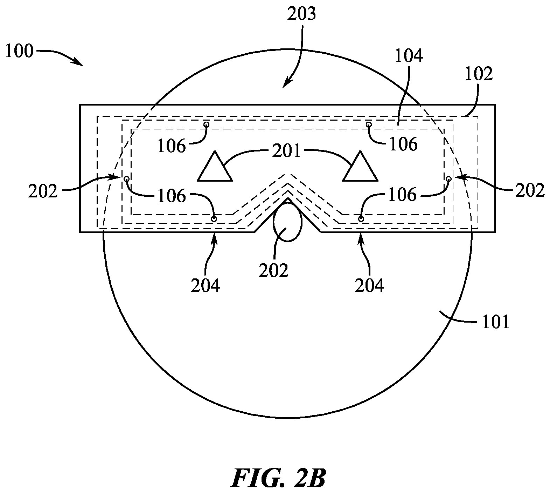

Additionally shown in FIG. 2B are the locations of the connector(s) 106. In particular examples, the connector(s) 106 are located at the forehead 203, the maxilla facial region 204, and the zygoma facial region 205. Other locations of the connector(s) 106 are herein contemplated. However, the connector(s) 106 in at least these positions can provide a dynamic, yet stable connection between the display 102 and the facial interface 104.

It will be appreciated that the connector(s) 106 at the different locations can be the same, or in certain cases, different. For instance, the connector(s) 106 can include a first joint (e.g., socket joint, soft joint, molded hinge joint, butterfly flexure joint, cam pivot joint, cross axis pivot joint, etc.) positioned at the forehead 203. In addition, the connector(s) 106 can include a second joint, different from the first joint, such as a pivot joint, elastomer spring joint, soft joint, single ball joint, etc. Indeed, different arrangements and types of the connector(s) 106 can be implemented to provide a particular force profile, amount of rigidity, etc.

Any of the features, components, and/or parts, including the arrangements and configurations thereof shown in FIG. 2A-2B can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 2A-2B.

As previously discussed, head-mountable device 100 can include connections at various locations. The forehead location of the connector(s) will now be discussed below.

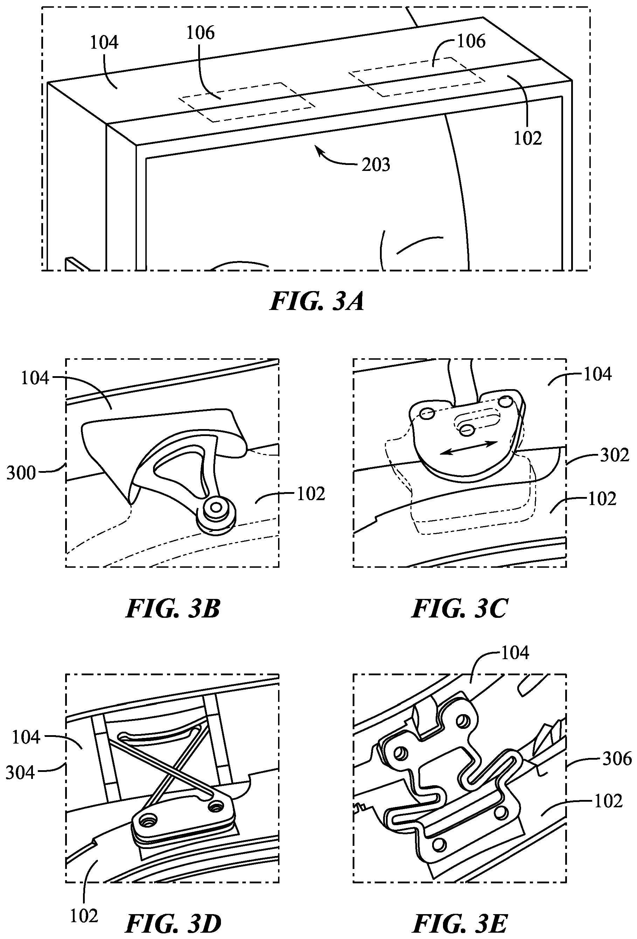

FIG. 3A illustrates an example of the connection(s) 106 located at the forehead 203. The connector(s) 106 can translate and/or rotate the facial interface 104 relative to the display 102 via the connector(s) 106. The connector(s) 106 can vary in mobility (e.g., ranging from mechanical to organic), as will be discussed below. Specifically, FIGS. 3B-3E illustrate a few examples of the connector(s) 106, namely connectors 300-306, respectively.

FIG. 3B illustrates the connector 300. The connector 300 includes a single degree of freedom. In particular, the connector 300 can include a pivot connection that rotatably connects the display 102 to the facial interface 104. For instance, the facial interface 104 can laterally pivot relative to the display 102, where the display 102 includes a pivot point. In these or other examples, the connector 300 limits the amount of motion (e.g., to certain angular thresholds relative to the pivot point).

FIG. 3C illustrates the connector 302. The connector 302 includes one degree of freedom plus translation. In certain implementations, the connector 302 includes a cam pivot. The connector 302 can rotationally pivot similar to the connector 300. In addition, the connector 302 can slide laterally such that the pivot point can also move. In this manner, the connector 302 can slidably and rotationally connect the display 102 to the facial interface 104. With more free range of motion, the connector 302 allows more organic motion than the connector 300.

FIG. 3D illustrates the connector 304. The connector 304 includes a cross-axis pivot joint connector (e.g., butterfly flexure). The connector 304 therefore includes a cross-axis design allowing each contact point on the facial interface 104 to move independently in a plane (e.g., x-y plane). The thickness of the cross-axis pivot joint can vary in flexure dependent on the thickness of a cross-axis member. For example, increasing the thickness (e.g., cross-sectional area) or decreasing the length of the cross-axis member(s) increases the flexural rigidity of the cross-axis pivot joint. Inversely, decreasing the thickness or increasing the length of the cross-axis member(s) decreases the flexural rigidity of the cross-axis pivot joint. For instance, a cross-axis member with a larger cross-sectional area while maintaining the length of the cross-axis member(s) increases the amount of compression force required to deflect the cross-axis member(s). In addition, the flexural rigidity can be altered by varying the material type or durometer.

FIG. 3E illustrates the connector 306. The connector 306 includes a flexure joint connector (e.g., a compliant mechanism capable of storing strain energy in one or more deformable/elastic members). The connector 306 can include a symmetrical design. In addition, the connector 306 can include a predetermined amount of stiffness in one or more directions, and a predetermined amount of flexibility in one or more different directions. The topology or architecture of the flexure joint can coincide with desired rigidity/flexibility properties in particular directions for providing mobility and/or support of the facial interface 104 relative to the display 102.

Any of the features, components, and/or parts, including the arrangements and configurations thereof shown in FIGS. 3A-3E can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIGS. 3A-3E.

FIG. 4A illustrates the connector(s) 106 located at the zygoma facial region 205. The connector(s) 106 can moveably constrain the facial interface 104 to the display 102 in the same or similar ways as discussed above. The connector(s) 106 can include a variety of different connectors. Examples of the connector(s) 106, namely connectors 400-414, are respectively discussed below in relation to FIGS. 4B-4E.

FIG. 4B illustrates the connector 400. The connector 400 can include a pivot joint (e.g., a single ball joint). The connector 400 includes a male portion and a female portion. The male portion is positioned on the display 102, and the female portion is positioned on the facial interface 104. When the male and female portions of the connector 400 are joined, the facial interface 104 can move relative to the display 102. In particular, the connector 400 can allow for spherical motion between the facial interface 104 and the display 102 of about 5 degrees, about 10 degrees, about 25 degrees, about 50 degrees, about 70 degrees, or more.

FIG. 4C illustrates the connector 402. The connector 402 can include a spring joint connector (e.g., metal spring, elastomer spring, plastic spring, composite spring, etc.) located at the zygomatic location. The connector 402 can translate and rotate (e.g., to accommodate cheek or eye movement, or a user's particular facial features). The connector 402 can be rigidly attached to the display 102, while being rotatably and translatably connected to the facial interface 104.

FIGS. 4D-4E illustrate the connectors 406-408, respectively. The connectors 406-408 include soft joints with compressible portions 407. The term "soft joint" references a joint that can compress and decompress. For example, a soft joint includes datums or hardstops, between which the soft joint can compress. The connector 406 includes two compressible portions 407, while the connector 408 includes a single compressible portion. The compressible portions 407 can be disposed between rigid portions of the connectors 406, 408. In addition, the positioning of the compressible portions 407 within the connectors 406, 408 can provide corresponding mobility in a predetermined direction. For instance, the connector 406 with two of the compressible portions 407 can include mobility (e.g., compressibility) in a first direction and mobility in a second direction different than the first direction. The connector 408 includes mobility in at least the first direction by virtue of a single compressible portion.

In one example, the compressible portions 407 include a foam material. The foam material can be adhered (e.g., glued, pasted, melted, etc.) in between portions of the connectors 406, 408. Additionally, or alternatively, the compressible portions 407 can include materials with properties that impart flexibility, softness, compressibility, deformability, etc. Examples of such material can include silicone, polymers, elastomers, hydrogels, etc. In addition, the compressible portions 407 can include molded material, printed material, cast material, etc.

FIGS. 4F-4G respectively illustrate cross-sectional views of the connectors 410, 412. The connector 410 includes a socket connector. The connector 412 includes a mini-socket connector. The connectors 410, 412 are similar to the connector 400-each including a male and female portion. The female portion (i.e., socket) corresponds to the facial interface 104, and the male portion (i.e., pin and ball) corresponds to the display 102. In particular, however, the connectors 410, 412 include a pivot center located at a specific place. For instance, the connector 410 includes a pivot center 411 located on the surface of the facial interface 104. By contrast, the connector 412 includes a pivot center 413 that is positionally offset from the surface of the facial interface 104 (e.g., by about 0.5mm to about 5mm, or about 1.4mm). In at least some examples, these variations of a pivot center can provide different rotational mobility.

FIG. 4H illustrates the connector 414. The connector 414 is the same as the connector 306 discussed above in relation to FIG. 3E. Indeed, connector 414 can include a flexure joint providing compliant-mechanism based mobility between the facial interface 104 and the display 102.

Any of the features, components, and/or parts, including the arrangements and configurations thereof shown in FIGS. 4A-4H can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIGS. 4A-4H.

As briefly indicated above, examples of a head-mountable device disclosed herein include a facial interface with one or more flexure portions that conform to myriad facial profiles and contours, thereby evenly distributing pressure and providing a comfortable user experience. These flexure portions can, via connectors described above, allow the facial interface 104 to more easily translate or rotate relative to the display 102. In accordance with one or more such examples, FIGS. 5A-5G illustrate example facial interfaces with flexure portions.

FIG. 5A illustrates a perspective view of a head-mountable device 500 including the display 102, a facial interface 502, and the connector(s) 106. The facial interface 502 includes a flexure portion 504.

As used herein, the term "flexure portion" refers to a section of a facial interface that is independently movable from other sections of the facial interface. In particular examples, a flexure portion is movable, bendable, flexible, deformable, translatable, rotatable (i.e., twistable), etc. relative to one or more other sections of the facial interface 104. A flexure portion can include various patterns, relief cutouts, slits, holes, etc. defined by the facial interface facial interface 104 to impart the desired flexibility. In certain implementations, a flexure portion includes a serpentine pattern (e.g., winds, turns, curvature, folds, etc.). Additionally, a flexure portion can include a same material as other non-flexure (e.g., solid) sections of the facial interface 104. In other examples, the flexure portion includes a different material than other non-flexure sections of the facial interface 104.

As will be described below in relation to FIGS. 5B-5G, the flexure portion 504 can be positioned at various locations (e.g., top corner region, bottom corner region, forehead region, temple region, etc.). In particular, the various flexure portions will be described positionally in relation to connectors 106a-106f. The connectors 106a, 106b correspond to forehead connectors for engaging a forehead of a face. The connectors 106c, 106d correspond to zygoma connectors for engaging a zygoma region of a face. The connectors 106e, 106f correspond to maxilla connectors for engaging a maxilla region of a face.

FIG. 5B illustrates a facial interface 506. The facial interface 506 is devoid of a flexure portion. That is, each section between the connectors 106a-106f includes a solid section.

By contrast, FIG. 5C illustrates a facial interface 508 with flexure portions 510a-510b positioned a temple region of a face. Indeed, the flexure portions 510a-510b are respectively positioned in between the forehead connectors (i.e., the connectors 106a, 106b) and the zygoma connectors (i.e., the connectors 106c, 106d). The flexure portions 510a-510b can span an entire section of the facial interface 508 between the forehead connectors and the zygoma connectors. In other implementations, the flexure portions 510a-510b can span a partial section of the facial interface 508 between the forehead connectors and the zygoma connectors. For instance, the flexure portions 510a-510b may stop at a connector support area that encompasses a threshold distance around one or more of the connectors 106a-106d, thereby leaving a more supportive region underneath and immediately adjacent to the connectors 106a-106d.

In FIG. 5C, solid sections-devoid of flexure portions-of the facial interface 508 also exist. In particular, the forehead region between the connectors 106a, 106b includes a solid section. Similarly, the bottom corner region between the zygoma connectors and the maxilla connectors are solid sections.

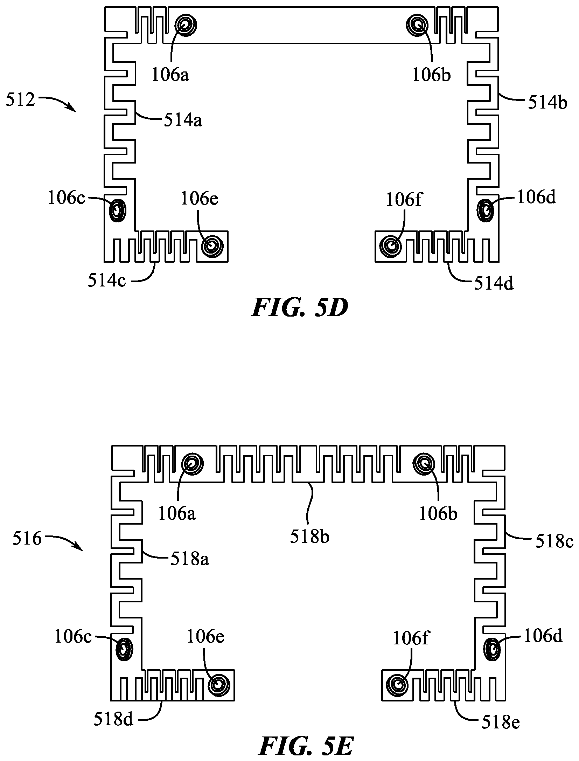

FIG. 5D illustrates a facial interface 512 with flexure portions 514a, 514b positioned at the temple region, and flexure portions 514c, 514d positioned at a bottom corner region. In particular, the flexure portions 514a, 514b are similarly positioned between the forehead connectors (i.e., the connectors 106a, 106b) and the zygoma connectors (i.e., the connectors 106c, 106d). In addition, the flexure portions 514c, 514d are respectively positioned between the zygoma connectors and the maxilla connectors (i.e., the connectors 106e, 106f). FIG. 5D also shows a solid section in the forehead region between the connectors 106a, 106b.

FIG. 5E illustrates a facial interface 516 with flexure portions 518a-518e. The flexure portions 518a, 518c are respectively positioned at temple regions of a face between the forehead connectors (i.e., the connectors 106a, 106b) and the zygoma connectors (i.e., the connectors 106c, 106d). The flexure portion 518b is positioned at a forehead region of a face (i.e., between the connectors 106a, 106b). The flexure portions 518d, 518e are positioned at a bottom corner region between the zygoma connectors and the maxilla connectors (i.e., the connectors 106e, 106f). Further shown in FIG. 5E, the only portions of the facial interface 516 devoid of a flexure portion includes the regions at the joints or connectors themselves (and a surrounding radius).

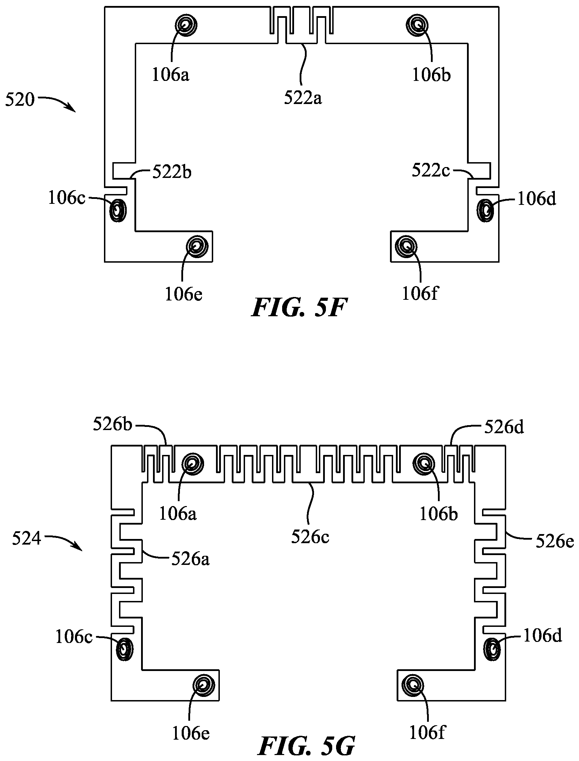

FIG. 5F illustrates a facial interface 520 with flexure portions positioned at the forehead region and a bottom temple region (as a temple flare). In particular, the facial interface 520 includes the flexure portion 522a positioned at a forehead region of a face between the connectors 106a, 106b. In addition, the facial interface 520 includes flexure portions 522b, 522c respectively positioned between the forehead connectors and the zygoma connectors, and adjacent to the zygoma connectors (i.e., connectors 106c, 106d). In FIG. 5F, solid regions devoid of flexure portions also include portions of the forehead region, portions of the temple region, and all of the bottom corner region between the zygoma and maxilla connectors.

FIG. 5G illustrates a facial interface 524 with flexure portions 526a-526e. The flexure portions 526a, 526e are respectively positioned between the forehead connectors and the zygoma connectors, and adjacent to the zygoma connectors (i.e., connectors 106c, 106d). The flexure portions 526b, 526d are respectively positioned between the forehead connectors and the zygoma connectors, and adjacent to the forehead connectors (i.e., connectors 106a, 106b). In addition, the flexure portion 526c is positioned at a forehead region of a face between the connectors 106a, 106b. In FIG. 5G, solid regions devoid of flexure portions include portions of the temple region and all of the bottom corner region between the zygoma and maxilla connectors.

It will be appreciated that the foregoing examples of flexure portions can be implemented to provide varying degrees (and places) of flexibility and conformability. In this manner, the head-mountable device of the present disclosure can provide myriad different forms of flexibility as may be desired.

Any of the features, components, and/or parts, including the arrangements and configurations thereof shown in FIGS. 5A-5G can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIGS. 5A-5G.

The head-mountable device of the present disclosure can be manufactured in myriad different ways. Some methods or manufacturing processes can provide various advantages (e.g., decreased material consumption, weight savings, manufacturing friendliness, etc.). The following description in relation to FIGS. 6A-12 describes manufacturing and/or associated apparatus aspects.

FIGS. 6A - 6B illustrate an example assembly 600 of a head-mountable device implementing a double shot of material in accordance with one or more examples of the present disclosure. As shown, the assembly 600 includes the connectors 106a-106f described above. In addition, the assembly 600 includes a facial interface 602 having flexure portions 604. The flexure portions 604 may be the same as, or similar to the flexure portions 510a, 510b described above in relation to FIG. 5C.

In particular implementations, the assembly 600 in FIG. 6A includes only a first shot of material. In some examples, the first shot of material includes an injection molded material. For instance, the first shot of material includes a more rigid material, such as at least one of Pebax, TPU, TPE, PP, ABS, etc. In other examples, the first shot of material is less rigid (and more flexible).

Additionally shown in FIG. 6A, the assembly 600 can include tooling inserts 606. The tooling inserts 606 can be positioned at locations configured to receive a second shot of material. The tooling inserts 606 can be positioned at various locations along the facial interface 602. In particular implementations, however, the tooling inserts 606 are positioned at the forehead region between the connectors 106a, 106b, and at temple regions between the forehead connectors and the zygoma connectors (i.e., between the connectors 106a, 106b and the connectors 106c, 106d).

In FIG. 6B, the assembly 600 includes a second shot of material applied to the tooling inserts 606. In one or more examples, the second shot of material includes an overmolded, flexible material. For instance, the second shot of material includes an elastomer material (e.g., Neoprene, EVA, PVC, Acrylonitrile Butadiene Rubber, Ethylene Propylene, Fluorelastomer, Silicone, etc.). Thus, in some examples, the first shot of material and the second shot of material can be different. In these or other examples, the assembly 600 implementing double shots of material can provide various advantages, such as strategically positioned support, improved flexibility, etc.

In alternative examples, more than two shots of material can be implemented. Further, in some alternative examples, only a single shot of material is implemented. For instance, the assembly 600 can include a single, lightweight material (e.g., all aluminum).

Any of the features, components, and/or parts, including the arrangements and configurations thereof shown in FIGS. 6A-6B can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIGS. 6A-6B.

Other variations of combined materials are also herein contemplated. For example, some head-mountable devices of the present disclosure include a display frame of the display 102, where the display frame includes a combination of frame shells forming a box-type frame enclosure. In accordance with one or more such examples, FIGS. 7A-7B illustrate an example display 700 of a head-mountable device. In particular, FIGS. 7A-7B respectively illustrate assembled and exploded views of the display 700.

As shown, the display 700 includes a first frame shell 702 and a second frame shell 704. The first frame shell 702 includes a pocket 706 defined by the surface of the first frame shell 702. The pocket 706 can include one or more recesses, cutouts, etc. In certain implementations, the pocket 706 is defined by tooling surfaces (e.g., for injection molding, casting, etc.). The pocket 706 can additionally include webbing, such as a mold webbing, (indicated in dashed lines) that sections off or separates different portions of the pocket 706.

In some examples, the first frame shell 702 and the second frame shell 704 include different materials (albeit not required). For instance, the first frame shell 702 can include a plastic material, and the second frame shell 704 can include a metal material. In this manner, the second frame shell 704 can be combined with the first frame shell 702 to increase a stiffness or rigidity across the display 700. Indeed, the second frame shell 704 as a stiffener member can provide structural support, thereby stabilizing the display frame and increasing resistance to stresses (e.g., torsional stress, compressive stress, tension stress, etc.).

The first frame shell 702 and the second frame shell 704 can be formed or assembled in a variety of different ways. In some examples, the first frame shell 702 and the second frame shell 704 can be manufactured using molding techniques (e.g., injection molding, casting, etc.). In certain implementations, the first frame shell 702 includes a first-shot mold, and the second frame shell 704 includes a second-shot mold.

Any of the features, components, and/or parts, including the arrangements and configurations thereof shown in FIGS. 7A-7B can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIGS. 7A-7B.

As discussed above, displays (specifically display frames) can include a combination of materials. Additionally, or alternatively, display frames have one or more a relief cutouts. In accordance with one or more such examples, FIGS. 8A-8B illustrate an example display 800.

As shown, the display 800 includes relief cutouts 802 defined by the surface of the display frame. As used herein, the term "relief cutouts" refers to thru-holes, dimples, slits, slots, core-outs, recesses, etc. In addition, a relief cutout provides weight advantages over a conventional head-mountable device while maintaining the structural integrity (e.g., deflection integrity, stress integrity, etc.) of the display frame.

Here, the relief cutouts 802 include thru-holes in the display frame. The thru-holes can be sized and shaped in myriad different ways. In some examples, the thru-holes are rectangular, square, triangular, circular, etc. In other examples, the thru-holes are lozenge-shaped (e.g., cylindrical, pill-shaped) thru-holes. The relief cutouts 802 also include a spacing that can be optimized or tuned (as may be desired). Indeed, the relief cutouts 802 can be spaced apart to satisfy (e.g., meet or exceed) a threshold force or stress/strain profile of the display 800. Additionally, or alternatively, the relief cutouts 802 can be spaced apart to provide a particular amount of flexibility or rigidity. In certain implementations, the relief cutouts 802 are omitted from certain areas (e.g., at connector support areas corresponding to the connector(s) 106). Thus, some connector support areas are devoid of the relief cutouts 802.

Additionally, as shown in FIG. 8B, the display 800 includes a support structure 804 and an overmolding 806. The support structure 804 can be rigid (e.g., a metal material). By contrast, the overmolding 806 can include a plastic material, elastomer material, etc. The support structure 804 can be positioned at predetermined areas of the display 800, for instance, at areas corresponding to the connector(s) 106 (e.g., for increased rigidity and/or structural integrity per finite element analysis). To illustrate, the support structure 804 is positioned directly underneath the connector(s) 106 and extends a distance past at least one relief cutout. In certain implementations, the support structure 804 is positioned all along the display 800.

In particular implementations, the support structure 804 is positioned at an offset distance 808 from the overmolding 806. The offset distance 808 can range from about 0.2mm to about 4 mm. In certain examples, the offset distance 808 is about 0.75mm.

Any of the features, components, and/or parts, including the arrangements and configurations thereof shown in FIGS. 8A-8B can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIGS. 8A-8B.

The head-mountable devices, and in particular the frames of the displays of the present disclosure, can be formed of various materials and with different geometric variations. These example display frames can provide various advantages, including decreased weight. In accordance with one or more such examples, FIGS. 9A-9B respectively show example head-mountable devices 900a, 900b with example displays 902, 904.

In FIG. 9A, the head-mountable device 900a includes the display 902 connected to the facial interface 104 via the connector(s) 106. The display 902 in this example includes a frame including a single, lightweight material. For instance, the display 902 includes an all-metal frame. In certain implementations, the display 902 includes stainless steel (e.g., SUS 17-4PH). In other implementations, the display 902 includes aluminum (e.g., AL 6061). In alternative embodiments, the display 902 includes at least one of a composite material (e.g., carbon fiber), polycarbonate or thermoplastic material (e.g., Lexan), or other suitable material with a higher strength-to-weight ratio (e.g., titanium, magnesium, graphene, ceramics, etc.).

In FIG. 9B, the head-mountable device 900b similarly includes the display 904 connected to the facial interface 104 via the connector(s) 106. The display 904 can include one or more materials as just described for the display 902. In particular, however, the display 904 includes a frame including cored-out regions 906 in the forehead and temple areas of a face. The cored-out regions 906 can reduce the amount of material in the display 904, thereby reducing the weight of the display 904. In certain implementations, the cored-out regions 906 correspond to areas of the display 904 between the connector(s) 106. However, it will be appreciated that the cored-out regions 906 can be positioned in additional or alternative locations along the frame of the display 904, as may be desired.

Any of the features, components, and/or parts, including the arrangements and configurations thereof shown in FIGS. 9A-9B can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIGS. 9A-9B.

The present disclosure also contemplates stiffener members disposed between the facial interface 104 and the display 102. In accordance with one or more such examples, FIGS. 10A-10B illustrate head-mountable devices 1000a, 1000b. In particular, FIG. 10A shows the head-mountable device 1000a includes a display 1002a (i.e., a display frame) connected to the facial interface 104 via the connector(s) 106, as similarly described above. In addition, the head-mountable device 1000a includes a stiffener member 1004a disposed between the display 1002a and the facial interface 104. The stiffener member 1004a can include an additional frame, skeleton, hoop, or support structure. The stiffener member 1004a can extend partially along the display 1002a (e.g., until the zygoma connector), or in certain cases all along the display 1002a (e.g., until the maxilla connector).

In particular implementations, a gap exists between the stiffener member 1004a and the display 1002a. In these cases, the connectors 106 can bridge the gap between the stiffener member 1004a and the display 1002a.

The display 1002a further includes cored-out regions 1006. The cored-out regions 1006 can provide weight savings, as may be desired.

Likewise, FIG. 10B shows the head-mountable device 1000b includes a display 1002b connected to the facial interface 104 via the connector(s) 106, as similarly described above. In addition, the head-mountable device 1000b includes a stiffener member 1004b disposed between the display 1002b and the facial interface 104. The stiffener member 1004b can include an additional frame, skeleton, hoop, or support structure. The stiffener member 1004b can extend partially along the display 1002b (e.g., until the zygoma connector), or in certain cases all along the display 1002a (e.g., until the maxilla connector). The display 1002b further includes cored-out regions 1010, similar to the cored-out regions 1006 described above.

Any of the features, components, and/or parts, including the arrangements and configurations thereof shown in FIGS. 10A-10B can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIGS. 10A-10B.

As mentioned above, the head-mountable devices of the present disclosure can include myriad different configurations of cored-out portions. In accordance with one or more such examples, FIGS. 11A-11C illustrate display frames 1100a-1100c with respective cored-out portions (e.g., thru-holes, partial holes, recesses, etc.). In particular, FIG. 11A shows the display frame 1100a includes cored-out portions 1102a-1102d at the forehead and temple regions of a face. FIG. 11B shows the display frame 1100b including cored-out portions 1102a-1102b (thus only including cored-out regions at the forehead). In addition, FIG. 11C shows the display frame 1100c including cored-out portions 1104. The cored-out portions 1104 are defined by one or more backside surfaces oriented towards a facial interface (not shown). Thus, the cored-out portions 1104 are perpendicular to the cored-out portions shown in FIGS. 11A-11B.

It will be appreciated that the cored-out portions of the display frames 1100a-1100c can be located in various positions and in various configurations or patterns (e.g., to decrease the overall weight of the display frame). The cored-out portions can also be configured to maintain a structural stability of the display frame.

Any of the features, components, and/or parts, including the arrangements and configurations thereof shown in FIGS. 11A-11C can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIGS. 11A-11C.

FIG. 12 illustrates a display frame 1200 including an array of holes 1202 in accordance with one or more examples of the present disclosure. The array of holes 1202 can reduce an amount of material (and therefore, weight) of the display frame 1200. The array of holes 1202 can include a hole density such that at least (or at most) a certain number of holes is found within a predetermined area of the display frame 1200. As an alternative to the array of holes 1202, dimples or non-thru-holes can similarly be implemented in the display frame 1200.

Any of the features, components, and/or parts, including the arrangements and configurations thereof shown in FIG. 12 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIGS. 12.

FIG. 13 shows a display frame 1300 in accordance with one or more examples of the present disclosure. As illustrated, the display frame 1300 includes a single-shot plastic portion 1302. A variety of different plastics can be implemented. Moreover, the single-shot plastic portion 1302 can assume any number of different shapes and forms (albeit schematically shown as a block with various straight and curved edges).

In addition, the display frame 1300 can include metal stiffeners 1304. Examples of the metal stiffeners 1304 include sheets or pieces of metal (whether molded, shaped, cast, etc.). Further, the metal stiffeners 1304 can be arranged in different ways. For example, the metal stiffeners 1304 can be arranged in an array that structurally couples or connects them to each other (e.g., via attachment mechanisms 1308 and fasteners 1310). For instance, the metal stiffeners 1304 can be arranged partially around a perimeter of the single-shot plastic portion 1302. In other examples, the metal stiffeners can be arranged entirely around a perimeter of the single-shot plastic portion 1302.

The attachment mechanisms 1308 can include various pins, clasps, hinges, cams, swivels, balls, knuckles, springs, etc. Likewise, the fasteners 1310 can include screws, bolts, pins, press-fits, welds, bonds, etc.

In some examples, the display frame 1300 includes adhesives (not shown) to structurally couple the metal stiffeners 1304 (and associated attachment mechanisms 1308) and the single-shot plastic portion 1302. Examples of adhesives include glue, epoxy, thermal bonds, tape strips, etc. In alternative examples, the metal stiffeners 1304 and the single-shot plastic portion 1302 include no adhesives in between these components. For example, the metal stiffeners 1304 and the single-shot plastic portion 1302 can be sandwiched together via applied pressure from one or more additional frame layers, fabric, etc.

In some examples, the display frame 1300 can include additional layers (not shown). For instance, the display frame 1300 can include a final plastic "cover" to provide cosmetic and/or additional stiffness properties to the display frame 1300. The additional cover can be attached to the metal stiffeners 1304 in a same or similar fashion as just described between the metal stiffeners 1304 and the single-shot plastic portion 1302.

Any of the features, components, and/or parts, including the arrangements and configurations thereof shown in FIG. 13 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIGS. 13.

As mentioned above, many different types of connectors between a facial interface and a display frame are herein contemplated. The following description for FIGS. 14-19 corresponds to an example connector that includes a floating connection between a facial interface and a display frame. As a floating connection, the connector can be attached to one of the display frame or the facial interface, but not both, as will be described in more detail below.

FIG. 14 illustrates a perspective view of an example connector 1400 in accordance with one or more examples of the present disclosure. The connector 1400 can include a floating connection. The connector 1400 can therefore include a bumper, a compliant stop, or a contact mechanism positioned between a display frame 1402 and a facial interface 1404. The display frame 1402 and the facial interface 1404 are, respectively, the same as or similar to the display frames and facial interfaces discussed above. However, as shown specifically in FIG. 14, the connector 1400 is only attached to the display frame 1402 (*i.e.,* not also attached to the facial interface 1404). This constitutes a floating connection where the connector 1400 can contact or abut the facial interface 1404, but can also move relative to the facial interface 1404. For example, the connector 1400 can translate or rotate along a surface of the facial interface 1404. In certain examples, rounded edges or smooth surfaces of the connector 1400 can facilitate such movement or range of motion. As another example, the connector 1400 can compress against (or have more surface area contact with) the facial interface 1404, such as when donning the head-mountable device. In yet another example, the connector 1400 can retract or bias away from the facial interface 1404. Accordingly, the connector 1400 can provide desired flexibility and compliance (e.g., for improved comfort when wearing or adjusting the head-mountable device), yet also provide desired rigidity, support, and load-bearing functionality.

Any of the features, components, and/or parts, including the arrangements and configurations thereof shown in FIG. 14 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 14.

FIG. 15A illustrates a side view of an example connector positioned between a display frame and a facial interface in accordance with one or more examples of the present disclosure. As shown, the connector 1400 can include one or more posts. In particular implementations, the connector 1400 includes a post 1502a. In other implementations, the connector 1400 includes a post 1502b.

In these or other examples, a post can include an element with rigid and/or pliant portions. In some examples, a post can include a soft outer portion and a rigid inner portion (e.g., a sheath or sheet metal overmolded by a softer, cushioning material). A post can include a contact mechanism for contacting the facial interface 1404. Additionally or alternatively, a post can include an arm, a bumper, a mechanical stop, a damper, a shock absorber, a spring, an actuator, a crumple element, a mechanical fuse, a break-away element, etc. In at least some examples, a post can include surfaces, joints, etc. that include a radius (or curvature) allowing movement, deflection, and/or energy absorption.

As shown in FIG. 15A, the post 1502a is longer than the post 1502b. It will be appreciated that the length of the posts 1502a, 1502b can determine the gap or distance between the connector 1400 and the facial interface 1404. For example, the post 1502a is positioned a distance 1506 from a contact surface 1508 of the facial interface 1404. Similarly, the post 1502b is positioned a distance 1504 from the contact surface 1508 of the facial interface 1404.

In addition to length of the posts 1502a, 1502b, an angle of the posts 1502a, 1502b relative to the display frame 1402 can also affect the distances 1504, 1506 to the facial interface 1404. The post 1502a is positioned at an angle 1510 relative to the display frame 1402. The post 1502b is positioned at an angle 1512 relative to the display frame 1402. These angles may be preset, adjusted, or actuated. In particular examples, the angles 1510, 1512 can be dynamically modified (e.g., decreased) in response to the post contacting the contact surface 1508 and flexing upward. The angles 1510, 1512 can also correspond to the angle of incidence or angle of contact with the contact surface 1508. Likewise, the angles 1510, 1512 can affect the point of contact with the contact surface 1508. The point of contact and angle of incidence (as well as the distances 1504, 1506) can include tunable factors for tuning comfort, fit, adjustability, load responsiveness, etc. as may be desired.

Any of the features, components, and/or parts, including the arrangements and configurations thereof shown in FIG. 15A can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 15A.

With respect to the facial interface 1404, it will be appreciated that the facial interface 1404 can include many different variations. In some examples, the facial interface 1404 can include thicker regions and/or thinner regions at certain locations along the facial interface 1404, can be fixed or removable, and can be removably attached by any number of systems such as hook and loop, magnets, fasteners, and the like. In accordance with one or more such examples, FIG. 15B illustrates a cross-sectional view of a facial interface 15-1502. FIG. 15C illustrates a cross-sectional view of a forehead region 15-1503 of the facial interface 15-1502, while FIG. 15D illustrates a cross-sectional view of a cheek region 15-1505 of the facial interface 15-1502. The facial interface 15-1502 can be substantially similar to, including some or all of the features of, the facial interfaces described herein.

In some examples, the facial interface 15-1502 includes a compressible portion that can include a central region 15-1509 and an extended region 15-1507. In some examples, the central region 13.15-1509 and the extended region 15-1507 can be a single unitary component (*e.g.,* a foam piece). In some examples, the central region 15-1509 can be a separate and distinct material from the extended region 15-1507 (*e.g.,* two different types of foam pieces). The central region 15-1509 can be shaped, sized, and positioned to correspond to the base of the frame. In other words, the central region 15-1509 can reside directly adjacent the base plastic. In contrast, the extended region 15-1507 can extend beyond a footprint of the base, such that the extended region 15-1507 overhangs the base.

In some examples, the extended region 15-1507 can run along an entirety of the facial interface 15-1502. The compressible portion (or combination of the extended region 15-1507 and the central region 15-1509) can have a varying cross-section or be asymmetric relative to the base. For example, the extended region 15-1507 can taper as it travels from the forehead region 15-1503 to the cheek region 15-1505. In other words, the extended region 15-1507 can decrease in size as it approaches the cheek region 15-1505, so that it is wider at the forehead, and less wide at the cheeks. For example, at the forehead region 15-1503 shown in FIG. 15C, the extended region 15-1507 can overhang a base by approximately equal to or greater than 3.4 mm. In contrast, at the cheek region 15-1505 shown in FIG. 15C, the extended region 15-1507 can overhang a base by approximately equal to or less than 3.4 mm. Accordingly, the extended region 15-1507 can extend beyond or overhang the central region 15-1509 and the base plastic both above and below, as oriented in the figures. The varying asymmetric cross-section of the extended region 15-1507 can be intentionally varied to correspond to user facial features, thereby increasing comfort and fit of the head-mountable device.

Any of the features, components, and/or parts, including the arrangements and configurations thereof shown in FIGS. 15B-15D can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIGS. 15B-15D.

As mentioned above, a connector of the present disclosure can include multiple portions with differing material properties. In accordance with one or more such examples, FIG. 16 illustrates a cross-sectional view of the connector 1400 including a connector frame 1600 for a post 1602. The cross-sectional view of FIG. 16 is taken along the cross-sectional slice indicated in FIG. 15A.

As shown in FIG. 16, the connector frame 1600 can include a rigid or semi-rigid core extending at least partially through the post 1602. The connector frame 1600 can provide a desired stiffness or shape to the post 1602. For example, as shown in FIG. 16, the connector frame 1600 includes a bend adjoining a portion attached to the display frame 1402 and the post 1602 extending away from the display frame 1402. In certain examples, the post 1602 is overmolded onto, adhered to, or fastened to the connector frame 1600. In other examples, the post 1602 is formed integral with the connector frame 1600. In at least one example, the connector frame 1600 includes sheet metal and the surrounding portion of the post 1602 can include an elastomer material, a rubber, a silicone, a composite, a plastic, or any combination thereof.

As will be shown more below in relation to FIG. 17, the connector frame 1600 can include one or more elements for attaching the connector 1400 to the display frame 1402.

Any of the features, components, and/or parts, including the arrangements and configurations thereof shown in FIG. 16 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 16.

FIG. 17 illustrates a top view of an example connector in accordance with one or more examples of the present disclosure. As shown, the connector 1400 can include the connector frame 1600 discussed above. In particular, the connector frame 1600 can include one or more through holes 1700. Via the through-holes 1700, the connector frame 1600 can be fastened to the display frame 1402 (having corresponding holes that are align-able with the connector frame 1600). In this way, the connector frame 1600 can be secured to the display frame 1402.

In some examples, the connector 1400 can be attached to a stiffener 1604. The stiffener 1604 can provide certain material property advantages to the connector 1400. For example, the stiffener 1604 can be used to tune the spring force, biasing strength, flexibility, etc. of the connector frame 1600. Additionally or alternatively, the spring force, biasing strength, flexibility, etc. for the connector 1400 as a whole can be tuned via pre-biasing the connector frame 1600 according to a predetermined force-displacement curve. In other examples, the spring force, biasing strength, flexibility, etc. for the connector 1400 can be tuned via an overmolded material for the post 1602 or by adding a spring member, a torsion bar, or an actuator to the connector 1400.

Additionally or alternatively, the stiffener 1604 can provide a datum surface (*e.g.,* a flat mating surface) for the connector frame 1600. In certain examples, the fixture biasing can be implemented to properly position, orient, and/or attach the connector frame 1600 to the stiffener 1604. Additionally or alternatively to the stiffener being used as a datum, an adhesive can be used to flow into a desired position and solidify into a datum-like element relative to the connector frame 1600.

Additionally, in particular examples, the connector frame 1600 (and the connector 1400 as a whole) can be removed from the display frame 1402. For example, fasteners (not shown) can be removed from the through-holes 1700 to allow removal of the connector 1400 from the display frame 1402. In some examples, the fasteners and the through-holes 1700 can be user-accessible and/or manufacturer-accessible for swapping out the connector 1400 for a connector with a different size post and/or a post with a different angle relative to the display frame (*e.g.,* a shorter or longer post as shown in FIG. 15A). Accordingly, in some examples, the connector 1400 is modular.

Any of the features, components, and/or parts, including the arrangements and configurations thereof shown in FIG. 17 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 17. For example, a connector 1606 shown in the background of FIG. 16 can include one or more other connectors described above in the present disclosure.

It will be appreciated that one or more connectors of the present disclosure can be modified to exhibit certain material properties (e.g., increased strength, resilience, flexibility, etc.). In accordance with one or more such examples, FIG. 18 illustrates a side perspective view of a base of a connector where it is attached to a display frame. In particular, FIG. 18 illustrates a gusset 1800 formed on the surface of the connector frame 1600. The gusset 1800 can include a feature on the connector 1400 that helps to reinforce the connector attachment to the display frame 1402 (*e.g.,* via the stiffener 1604). In some examples, the gusset 1800 includes a plate adhered, bonded, welded, or molded onto the connector frame 1600. In certain examples, the gusset 1800 includes a reinforced joint. In at least one example, the gusset 1800 is shaped to distribute loads from concentrating around fasteners 1802 on the connector frame 1600.

Any of the features, components, and/or parts, including the arrangements and configurations thereof shown in FIG. 18 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 18.

FIG. 19 illustrates another cross-sectional view of the connector 1400 in accordance with one or more examples of the present disclosure. As shown in FIG. 19, the connector frame 1600 can be discontinuous at certain areas of the connector frame 1600. For example, the connector frame 1600 can include one or more reliefs 1900 (*e.g.,* cutouts for added flexibility, decreased weight, or less material consumption). In these or other examples, the post 1602 can include corresponding portions positioned inside the relief 1900 that are solid plastic, elastomer, or other material.

Any of the features, components, and/or parts, including the arrangements and configurations thereof shown in FIG. 19 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 19. The following description discusses example adhesives in a head-mountable device. Indeed, a head-mountable device of the present disclosure can include a variety of different adhesives that perform various functions and/or impart certain properties.

In particular, FIGS. 20-21 respectively show perspective and top views of example adhesives in an example head-mountable device. The term adhesives can refer to one or more types of glue, epoxy adhesives, polyurethane adhesives, polyimide adhesives, paste adhesives, liquid adhesives, film adhesives, pellet adhesives, strip adhesives, hot melt, thermosetting adhesives, pressure sensitive adhesives, contact adhesives, structural adhesives, non-structural adhesives, semi-structure adhesives, tape, bonds, welds, etc.

Specifically, as shown, the display frame 1402 is depicted with a cover or housing portion removed for illustration purposes (*e.g.,* to expose various adhesives that can be included within the display frame 1402). In some examples, the display frame 1402 includes a connector 2000, as described above. In at least certain implementations, the connector 2000 can include a different material than the stiffener 1604. For instance, in one example, the connector 2000 can include a 316 stainless steel, and the stiffener 1604 can include a 17-4 steel. In such an example, laser welding the dissimilar materials can cause oxidation, such as oxidation of the chromium in the 316 stainless steel. In specific examples, adhesives 2002 can help prevent (or at least reduce an amount of) oxidation on one or both of the connector 2000 or the stiffener 1604. Thus, the adhesives 2002 can be positioned on the surface of the stiffener 1604 at an end portion adjacent to the connector 2000. In at least one example, the adhesives 2002 are positioned at least partially around fasteners attaching the stiffener 1604 to the display frame 1402. In these or other examples, the adhesives 2002 can interact with the surface of the stiffener 1604 and/or the connector 2000 (*e.g.,* when under thermal loads from laser welding applications) to inhibit oxidation. Other cosmetic advantages can also be imparted by the adhesives 2002, as desired.

The display frame 1402 can also include adhesives 2004. The adhesives 2004 are strips of adhesive, which can be positioned longitudinally along a top surface of the stiffener 1604. In particular, the adhesives 2004 can couple the outer portion or shell (removed for interior illustration purposes) of the display frame to the stiffener 1604. This coupling can impart increased stiffness to the display frame 1402 as a whole (and in particular, impart more stiffness to the less rigid or stiff outer shell)-by leveraging stiffness of the stiffener 1604.

In addition, the display frame 1402 can include adhesives 2006. The adhesives 2006 can include adhesives positioned underneath the stiffener 1604. The adhesives 2006 can specifically adhere the stiffener 1604 to the bottom housing or shell of the display frame 1402.

In some examples, the display frame 1402 can include adhesives 2008. The adhesives 2008 can include a discontinuous glue strip between top and bottom shells of the display frame 1402. In at least one example, the gaps between the adhesives 2008 can impart thermal advantages. For instance, the adhesives 2008 can reduce or eliminate deformation in the display frame 1402 caused by the different coefficients of thermal expansion in response to higher heat and/or humid environments.

In one or more examples, the display frame 1402 can include an adhesive 2010. The adhesive 2010 can include a gap filler or hardstop glue to limit travel of the connector 2000. For example, the adhesive 2010 can bound the travel of the connector 2000 towards the optical system such that the adhesive 2010 serves as a mechanical stop. In these or other examples, the adhesive 2010 can include an adhesive with higher compressive stiffness compared to other adhesives. For example, the adhesive 2010 can be load bearing (*e.g.,* to at least partially transfer an applied load to the connector 2000).

Additionally or alternatively to the foregoing adhesives, it will be appreciated that other examples are also contemplated. For instance, in some implementations, the display frame 1402 can include near net molding (which can obviate one or more adhesives discussed above).

Any of the features, components, and/or parts, including the arrangements and configurations thereof shown in FIGS. 20-21 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIGS. 20-21. The following description discusses example adhesives in a head-mountable device. Indeed, a head-mountable device of the present disclosure can include a variety of different adhesives that perform various functions and/or impart certain properties.

In some examples, the present systems and methods can collect personal information data in order to improve or customize the present systems and methods to a specific user. Personal information data, gathered pursuant to authorized and well established secure privacy policies and practices that are appropriate for the type of data collected, can be used to implement and improve on the various embodiments described herein. The disclosed technology is not, however, rendered inoperable in the absence of such personal information data.

This description uses specific nomenclature to provide a thorough understanding of the described embodiments. However, the specific details are not required in order to practice the described embodiments. Rather, the foregoing descriptions are presented for purposes of illustration and description. They are not exhaustive or intended to limit the embodiments to the precise forms disclosed. Many modifications and variations are possible in view of the above teachings.

### NUMBERED CLAUSES

By way of non-limiting example, some aspects of the disclosure are set out in the following numbered clauses.

Clause 1 - An apparatus, comprising: a display; a facial interface; a moveable connector disposed between the display and the facial interface, the facial interface being translatable or rotatable relative to the display via the connector; and a strap connected to the apparatus.

Clause 2 - The apparatus of clause 1, wherein the connector constrains motion of the facial interface relative to the display at a forehead location or a zygoma location of a face.

Clause 3 - The apparatus of clause 2, wherein: the apparatus comprises an additional connector between the display and the facial interface; the additional connector comprises a first joint positioned at the forehead location; and the connector comprises a second joint different than the first joint, the second joint being positioned at the zygoma location.

Clause 4 - The apparatus of clause 1, wherein the connector comprises a pivot joint, a soft joint, a flexure joint, or a spring joint.

Clause 5 - The apparatus of clause 1, wherein the facial interface comprises a flexure portion.

Clause 6 - The apparatus of clause 5, wherein the flexure portion comprises a serpentine pattern.

Clause 7 - The apparatus of clause 5, wherein the flexure portion is positioned at a top corner region, a bottom corner region, a forehead region, or a temple region of the facial interface.

Clause 8 - A head-mountable device, comprising: a display; a facial interface; and a joint movably constraining the facial interface to the display at a forehead region on a face or a zygoma region on the face.

Clause 9 - The head-mountable device of clause 8, further comprising: a display frame housing the display; a strap connected to at least one of the display frame or the facial interface; and an additional joint, wherein the joint movably constrains the facial interface to the display at the forehead region and the additional joint movably constraints the facial interface to the display at the zygoma region.

Clause 10 - The head-mountable device of clause 9, further comprising: a flexure portion adjacent to the joint; and an additional joint, wherein the flexure portion is positioned in between the joint and the additional joint.

Clause 11- The head-mountable device of clause 10, wherein the facial interface further comprises a solid portion, the flexure portion and the solid portion both positioned between the joint and the additional joint.

Clause 12- The head-mountable device of clause 9, wherein the facial interface comprises an additional flexure portion, the flexure portion being positioned on a first side of the joint, and the additional flexure portion being positioned on a second side of the joint.

Clause 13 - The head-mountable device of clause 12, wherein: the flexure portion is positioned at the forehead region; and the additional flexure portion is positioned at a temple region.

Clause 14 - The head-mountable device of clause 12, wherein: the flexure portion is positioned at a temple region; and the additional flexure portion is positioned at a zygoma-maxilla region.

Clause 15 - The head-mountable device of clause 8, wherein the facial interface comprises: a solid portion on a first side of the joint; and a flexure portion on a second side of the joint.

Clause 16 - The head-mountable device of clause 8, wherein the facial interface comprises: a first flexure portion at a first facial position; and a second flexure portion at a second facial position mirroring the first facial position.

Clause 17 - A wearable apparatus comprising: a display; a facial interface comprising a flexure portion; and a connector between the display and the facial interface, the facial interface being translatable and rotatable via the connector and the flexure portion.

Clause 18 - The wearable apparatus of clause 17, wherein the facial interface comprises an elastomer material.

Clause 19 - The wearable apparatus of clause 18, wherein the facial interface comprises: a first shot composed of a first material; and a second shot composed of a second material that differs from the first material, wherein the first material comprises the elastomer material.

Clause 20 - The wearable apparatus of clause 17, wherein the connector comprises a compliant mechanism.

Clause 21 - A head-mountable device, comprising: a display comprising a display frame, the display frame defining a relief; a facial interface; and a connector positioned between the display frame and the facial interface.

Clause 22 - The head-mountable device of clause 21, wherein the relief comprises a lozenge-shaped thru-hole in the display frame.

Clause 23 -The head-mountable device of clause 21, wherein the relief comprises a cored-out portion of the display frame.

Clause 24 - The head-mountable device of clause 21, wherein the relief comprises an array of dimples or thru-holes.

Clause 25 - The head-mountable device of clause 21, further comprising a stiffener member positioned between the display frame and the facial interface.

Clause 26 - The head-mountable device of clause 25, wherein the connector couples the display frame and the stiffener member to the facial interface.

Clause 27- The head-mountable device of clause 21, wherein the display frame comprises: a first frame shell comprising a first material defining a pocket in a first surface; and a second frame shell comprising a second material, the second frame shell being coupled to the first frame shell over the pocket, and the second material being different than the first material.

Clause 28 - The head-mountable device of clause 21, wherein the display frame comprises: a metal portion; and an overmolding that envelops the metal portion.

Clause 29 - The head-mountable device of clause 21, further comprising a connector support area of the display frame, the connector support area comprising a reinforcement material.

Clause 30 - The head-mountable device of clause 29, wherein the connector support area is devoid of the relief.

Clause 31 - The head-mountable device of clause 21, wherein the connector includes at least one of a zygoma connector positioned at a zygoma location on a face, a maxilla connector positioned at a maxilla location on the face, and a forehead connector positioned at a forehead location on the face.

Clause 32 - A wearable apparatus comprising: a display frame; a facial interface; a stiffener member positioned between the display frame and the facial interface; and a connector coupling the display frame and the stiffener member to the facial interface.

Clause 33 - The wearable apparatus of clause 32, wherein the display frame and the stiffener member define a gap.

Clause 34 - The wearable apparatus of clause 33, wherein the connector bridges the gap between the display frame the stiffener member.

Clause 35 - The wearable apparatus of clause 32, further comprising an additional connector coupling the display frame and the stiffener member to the facial interface.

Clause 36 - An apparatus comprising: a wearable display; a display frame attached to the wearable display, the display frame comprising: a first frame shell comprising a first material defining a pocket in a first surface; and a second frame shell comprising a second material, the second frame shell being coupled to the first frame shell over the pocket, and the second material being different than the first material.

Clause 37 - The apparatus of clause 36, wherein: the first frame shell comprises a plastic material; and the second frame shell comprises a metal material.

Clause 38 - The apparatus of clause 36, wherein: the first frame shell comprises a first-shot mold; and the second frame shell comprises a second-shot mold.

Clause 39 - The apparatus of clause 36, wherein the second material comprises a stiffener material.

Clause 40 - An apparatus, comprising: a display; a facial interface; a moveable connector disposed between the display and the facial interface, the facial interface being translatable or rotatable relative to the display via the connector; and a strap connected to the apparatus.

Clause 41 -The apparatus of clause 40, wherein the connector constrains motion of the facial interface relative to the display at a forehead location or a zygoma location of a face.

Clause 42 -The apparatus of any of clauses 40 or 41, wherein: the apparatus comprises an additional moveable connector between the display and the facial interface; the additional moveable connector comprises a first joint positioned at the forehead location; and the moveable connector comprises a second joint different than the first joint, the second joint being positioned at the zygoma location.

Clause 43 -The -apparatus of any of clauses 40 to 42, wherein the moveable connector comprises a pivot joint, a soft joint, a flexure joint, or a spring joint.

Clause 44 -The apparatus of any of clauses 40 to 43, wherein the moveable connector comprises a compliant mechanism.

Clause 45 -The apparatus of any of clauses 40 to 44, wherein the facial interface comprises a flexure portion.

Clause 46 -The apparatus of clause 45, wherein the flexure portion comprises a serpentine pattern.

Clause 47 -The apparatus of clauses 45 or 46, wherein the flexure portion is positioned at a top corner region, a bottom corner region, a forehead region, or a temple region of the facial interface.

Clause 48 -The apparatus of any of clauses 45 to 47, wherein the flexure portion is positioned in between the moveable connector and an additional moveable connector.

Clause 49 -The apparatus of clause 48, wherein the facial interface further comprises a solid portion, the flexure portion and the solid portion both positioned between the moveable connector and the additional moveable connector.

Clause 50 -The apparatus of any of clauses 45 to 49, wherein the facial interface comprises an additional flexure portion, the flexure portion being positioned on a first side of the moveable connector, and the additional flexure portion being positioned on a second side of the moveable connector.

Clause 51 -The apparatus of clause 50, wherein: the flexure portion is positioned at a forehead region; and the additional flexure portion is positioned at a temple region.

Clause 52 -The apparatus of clause 50, wherein: the flexure portion is positioned at a temple region; and the additional flexure portion is positioned at a zygoma-maxilla region.

Clause 53 -The apparatus of any of clauses 40 to 52, wherein the facial interface comprises: a/the solid portion on a first side of the moveable connector; and a/the flexure portion on a second side of the moveable connector.

Clause 54 -The apparatus of any of clauses 40 to 53, wherein the facial interface comprises: a first flexure portion at a first facial position; and a second flexure portion at a second facial position mirroring the first facial position.

## Claims

1. A head-mountable device (100), comprising:
a display (102);
a facial interface (104); and
a joint (106) movably constraining the facial interface to the display at a forehead region (203) on a face or a zygoma region (205) on the face.

2. The head-mountable device of claim 1, further comprising:
a display frame housing the display;
a strap (103) connected to at least one of the display frame or the facial interface; and
an additional joint (106), wherein the joint movably constrains the facial interface to the display at the forehead region and the additional joint movably constraints the facial interface to the display at the zygoma region.

3. The head-mountable device of claim 2, further comprising:
a flexure portion (504) adjacent to the joint; and
an additional joint (106), wherein the flexure portion is positioned in between the joint and the additional joint.

4. The head-mountable device of claim 3, wherein the facial interface (104) further comprises a solid portion, the flexure portion (504) and the solid portion both positioned between the joint and the additional joint.

5. The head-mountable device of claim 2, wherein the facial interface (104) comprises an additional flexure portion (518a-518e), the flexure portion being positioned on a first side of the joint, and the additional flexure portion being positioned on a second side of the joint.

6. The head-mountable device of claim 5, wherein:
the flexure portion (518b) is positioned at the forehead region; and
the additional flexure portion (518a,518c) is positioned at a temple region.

7. The head-mountable device of claim 5, wherein:
the flexure portion (518a,518c) is positioned at a temple region; and
the additional flexure portion (518d, 518e) is positioned at a zygoma-maxilla region.

8. The head-mountable device of claim 1, wherein the facial interface (104) comprises:
a solid portion on a first side of the joint; and
a flexure portion on a second side of the joint.

9. The head-mountable device of claim 1, wherein the facial interface (104) comprises:
a first flexure portion (510a) at a first facial position; and
a second flexure portion (510b) at a second facial position mirroring the first facial position.

10. A wearable apparatus (100) comprising:
a display (102);
a facial interface (104) comprising a flexure portion; and
a connector (106) between the display and the facial interface, the facial interface being translatable and rotatable via the connector and the flexure portion.

11. The wearable apparatus of claim 10, wherein the facial interface (104) comprises an elastomer material.

12. The wearable apparatus of claim 11, wherein the facial interface (104) comprises:
a first shot composed of a first material; and
a second shot composed of a second material that differs from the first material, wherein the first material comprises the elastomer material.

13. The wearable apparatus of any one of claims 10 to 12, wherein the connector comprises a compliant mechanism.
